# EUROPEAN PATENT SPECIFICATION

(11) **EP 3 954 091 B1**
(45) Date of publication and mention of the grant of the patent: **09.07.2025**
(21) Application number: 19722603.8
(22) Date of filing: 06.05.2019
(51) Int. Cl.: H04L 43/12, H04L 43/02, H04L 43/20

(54) **DATA HANDLER**
DATEN-HANDLER
GESTIONNAIRE DE DONNÉES

(43) Date of publication of application: 16.02.2022
(73) Proprietor: Huawei Technologies Co., Ltd., Shenzhen, Guangdong 518129 (CN)
(72) Inventor: VAISHNAVI, Ishan, 80992 Munich (DE); TRIVISONNO, Riccardo, 80992 Munich (DE); POE, Wint Yi, 80992 Munich (DE)
(74) Representative: Gill Jennings & Every LLP
(86) International application number: PCT/EP2019/061584
(87) International publication number: WO 2020/224759

(56) References cited:
- WO-A1-2019/032968
- "3rd Generation Partnership Project; Technical Specification Group Services and System Aspects; Architecture enhancements for 5G System (5GS) to support network data analytics services (Release 16)", vol. SA WG2, 24 April 2019 (2019-04-24), XP051719179, Retrieved from the Internet <URL:http://www.3gpp.org/ftp/tsg%5Fsa/WG2%5FArch/Latest%5FSA2%5FSpecs/Latest%5Fdraft%5FS2%5FSpecs/23288%2D040%2Ezip> [retrieved on 20190424]
- HUAWEI ET AL: "Adding Setup of Network Map for Data Collection and Triggering of NWDAF Data Collection", vol. SA WG2, no. Xi'an, China; 20190408 - 20190412, 2 April 2019 (2019-04-02), XP051719952, Retrieved from the Internet <URL:http://www.3gpp.org/ftp/tsg%5Fsa/WG2%5FArch/TSGS2%5F132%5FXiAn/Docs/S2%2D1903814%2Ezip> [retrieved on 20190402]

## Description

### TECHNICAL FIELD

The present disclosure relates to a Data handler in a communication network, in particular in a 5G or 3GPP communication network.

### BACKGROUND

In a 5G communication network, often referred to as 5G System (5GS), there is a need to support monitoring services to different network elements such as user entities, base stations or controllers, for different purposes. Different functional components of 5GS require monitoring data from different other functional components of 5GS. In other words, the logical entity of 5GS functional components, so called Network Functions (NF), produces monitoring data which are consumed by other logical entity of 5GS functional components, e.g. other NFs.

The monitoring data may be performance data relating to e.g. the network, a service, NSI, NSSI or NF, or fault supervision data or application data or data relating to data analytics, or assurance data or SLA data or security data or data relating to UE or user. Each logical entity of 5GS functional components, e.g., Application, Assurance, or Data Analytics can be a monitoring data producer for a specific monitoring service and/or monitoring data consumer for a specific monitoring service which are defined by way of example as follows:
· Monitoring data producer: A network entity e.g. NF in 5GS which produces any type of monitoring data related to 5GS Network or Network Slicing, e.g., Network or Network Slice Resources, Service or Application related KPIs (Key performance Indicators), SLA (Service Level Agreement), Analytics data, Security, Performance (PM, FM)).

Monitoring data consumer: A network entity e.g., NF in 5GS which consumes any type of monitoring data related to 5GS Network and Network Slicing e.g., Network/Network Slice Resources; Service or Application related KPls, SLA, Analytics data, Security, Performance, e.g. PM, FM.

As to the 3GPP standard, the 3GPP SA5 scope focuses on operational procedures relating the 5G CN Management Plane (MP) for Network and/or Network Slicing, 3GPP SA2 scope highlights 5G CN Control Plane (CP) for signaling and User Plane (UP) for payload traffic logical Network Slicing. There are, however, some limitations related to monitoring services in the current 5GS.
- In 5G CN, the monitoring service (e.g., PM services of NSIs/NSSIs/NFs) is solely performed in the 3GPP Management Plane. However, 5GC CP may require its own monitoring service, for example, to collect UP related monitoring data from UP.
- The current monitoring service provided by Management Plane (MP) may not be sufficient to support Verticals requirements, e.g., URLLC slices which requires extremely low latency. If the monitoring data from CP/UP NFs to other CP/UP NFs go via MP NF (e.g., PM/FM), the data collection time via MP may not be satisfied to meet the URLLC requirements (e.g., E2E latency of 5ms).

For example, the monitoring service (e.g. PM service) from MP collects monitoring data from CP or UP NFs and supports to the monitoring data consumers (e.g. NWDAF in CP) of any network entities (e.g. NFs) in CP, UP and MP. Since the interactions between CP and UP functions are quite often for the UP related monitoring data (e.g., NWDAF consumes UP monitoring data) data collecting through MP monitoring service is not practically feasible. Initially, MP defines monitoring service (i.e., PM/FM services) to collect the monitoring data related to the performance of Network and Network Slices which covers both CP and UP. However, the direction interaction of monitoring service is required between CP and UP to reduce time and complexity.

Another limitation is more critical for URLLC (Ultra-Reliable Low Latency Communication) application. As URLLC application requires in-time action evaluation, if the monitoring data goes through MP, the latency requirements will not be satisfied. As described in figure, NWDAF requires different latency to collect monitoring data from UP, CP and MP. Obviously if monitoring service (similar to PM service) is available at CP and UP, the required data collection latency can be reduced significantly.

"3rd Generation Partnership Project; Technical Specification Group Services and System Aspects; Architecture enhancements for 5G System (5GS) to support network data analytics services (Rel. 16)", 3GPP DRAFT; 23288-040_MCCCLEAN, 3rd GENERATION PARTERSHIP PROJECT (3GPP), vol.SA WG2 24 April 2019; provides that NWDAF can provide UE communication related analytics, in the form of statistics or predictions or both to a 5GC NF.

HUAWEI et al: " Adding Setup of Network Map for Data Collection and Triggering of NWDAF Data Collection", 3GPP Draft, S2-1903814- PCR TS 23.200 SETUP DATA COLLECTION, 3RD GENERATION PARTNERSHIP PROJECT (3GPP), VOL. SA WG2 no. Xi'an, CHINA, discloses the specific mechanism to provide the setup of NWDAF map of data collection from different sources and automatically trigger NWDAF data collection.

WO 2019/032968 A1 (CONVIDA WIRELESS LLC [US]) discloses a network data analytics function, which may be implemented as a service and provides an improved network data analytics capability in 5G core networks.

Therefore, there is a need to more efficiently handle monitoring data in a communication network.

### SUMMARY

Embodiments of the invention are defined by the features of the independent claims, and further advantageous implementations of the embodiments by the features of the dependent claims.

According to a first aspect, the invention relates to a data handler being configured to handle monitoring data among network entities, wherein the data handler is configured to: obtain a first data request from a first network entity, the first data request comprising a first data identifier, the first data identifier relating to monitoring data, obtain one or more second data identifier from one or more other network entities, wherein the one or more second data identifier is related to the monitoring data to be collected from one or more other network entities, generate association information based on the first data identifier and the one or more second data identifier, and determine, based on the association information, whether the monitoring data to be collected is already available at the data handler, or determine whether the monitoring data to be collected should be collected from the one or more other network entities by the data handler.

Thereby, data collection efficiency can be increased, because the monitoring data that is already available at the data handler does not need to be collected. This may reduce data traffic.

The data handler can be implemented as a service within a network entity, or as a network entity. The data handler can be a network entity or a network device or a network component, wherein a network entity or a network device can be a physical or logical entity. For example, the data handler can be Network Data Analytics Function (NWDAF) defined in 3GPP. The data handler can be Operation and Management (OAM) or Management Data Analytics Function (MDAF) defined in 3GPP. The data handler can be a Network Exposure Function (NEF).

An example of first data request is the subscription and/or request to an analytics information, in the case the data handler is the NWDAF. Furthermore, the first data identifier associated with a subscription to analytics information (i.e., the first data request) can be for instance the Analytics IDs, which uniquely identifies an analytics information. In particular, when a request and/or subscription to analytics information is received, the NWDAF generates association information based on the request and/or subscription to analytics information and the required data to be collected. Based on the association information, NWDAF can decide whether triggering new data collection is needed.

A consumer of the data handler is a network entity and/or a network device and/or a network component which requires information provided by the data handler. Any 5GC NFs/AFs/OAM entity or component, defined in 3GPP, can be the first network entity..

The information provided by the data handler can be Analytics information or Performance data or Fault supervision data or Assurance data or Security data or Management data relating to, e.g., the network or a service or Network Slice Instance (NSI) or Network Slice Subnet Instance (NSSI) or Network Function (NF) or Application Function (AF) or OAM and/or User. If the information provided by the data handler is Analytics information, the Analytics information can be a specific Analytics information of, for example, Network performance or Network Slice performance or NF load information, etc.

The monitoring data sent and/or forwarded to the first network entity can be either raw data, e.g., performance data, or processed data, e.g. analytics data. Examples of monitoring data are data relating to performance or fault supervision of e.g. the network, a service, NSI, NSSI or NF; data relating to Application(s) or UE or User(s); data related to Analytics Information and/or Assurance or Service Level Agreement and/or security relating to, in particular, the network or a service or NSI or NSSI or NF or UE or Application

The data handler can forward the monitoring data without any changes, or to process the monitoring data before sending the data out.

The second data identifier is used to obtain monitoring data provided by the data producer (i.e., one or more other network entities). Basically, a second data identifier is defined and supported by data producers (e.g., including 5G NFs/AFs/OAM). The data handler obtains the list of second data identifiers from data producers directly. A particular example of the second data identifier is the Event identifier or Event ID, wherein Event ID , is used to obtain monitoring data provided by any 5GC NFs/AFs defined in 3GPP. For example, The Event ID can be set to, for example, "UE reachability" and/or "Roaming status " from 5G NFs.

In order to obtain the association information, the respective indicators can be compared to each other or mapped onto each other.

For instance, when the data handler is NWDAF, NWDAF has the Analytics IDs to identify specific Analytics information (e.g., "Network Performance", "UE Mobility", "UE Communication", "NF load information"). NWDAF obtains the Event IDs for the monitoring data to be collected from monitoring data producers. NWDAF generates the association information by creating a mapping table of which requested Analytics ID requires which second data identifiers such as Event IDs from monitoring data producer(s).

In a further embodiment of the first aspect, the data handler comprises a network interface and/or service for receiving and/or obtaining the respective network identifier and for communicating with the network entities. The first network entity can be a data consumer consuming the monitoring data and the one or more other network entities can be data producers producing the monitoring data. The data handler can comprise one or more processors for data processing.

In a further embodiment of the first aspect, the association information indicates an association between data already receivable by the data handler, e.g. upon the basis of a subscription, and the monitoring data to be collected. If the monitoring data corresponds to the data already receivable by the data handler, then the association information indicates that the data already receivable by the data handler and the monitoring data correspond to each other or are equal. If the monitoring data does not correspond to the data already receivable by the data handler, then the association information indicates that the data already receivable by the data handler and the monitoring data are at least partly different.

In particular, the NWDAF shall be able to decide when collecting data from NFs/AFs whether triggering new data collection is needed to prevent unnecessary signaling for data collection and unnecessary data transfer. The NWDAF may take the following actions:
- The NWDAF generates the association information by creating a mapping table of which associates a request and/or subscription to analytics information (e.g., Analytics ID(s)) requires which with data collection parameters (e.g., Event ID(s) + Event Filter information + Event Reporting information + Target of Event Reporting).
- The NWDAF processes for trigger of a new event exposure subscription based on the association information.
   - if the available event subscription(s) can be associated with new analytics request/subscription, no new event subscription is created.
   - otherwise, the NWDAF creates new event subscription(s) or modify the existing subscription(s).

In a further embodiment of the first aspect, if the monitoring data to be collected is not available, in particular upon the basis of a subscription, then the data handler is configured to retrieve the monitoring data to be collected from the one or more other network entities upon the basis of at least one further data request, and wherein the data handler is configured to send and/or forward the retrieved monitoring data to be collected to the first network entity upon receiving the retrieved monitoring data; or wherein if the monitoring data is available at the data handler, the available monitoring data is send and/or forwarded to the first network entity.

In a further embodiment of the first aspect, the data handler is configured to determine that the monitoring data is already available at the data handler if the monitoring data is receivable by the data handler upon a basis of a data subscription from the one or more other network entities.

In a further embodiment of the first aspect, the data handler is configured to generate the at least one further data request if the monitoring data is not available at the data handler, the at least one further data request comprising at least one further data identifier relating to at least a subset of the monitoring data to be collected, and/or a subscription requesting a subscription of at least the subset of the monitoring data from at least one further network entity. The further network entity can be any monitoring data producer of the data handler. A monitoring data producer of the data handler is a network entity or a network device or a network component which exposes information requested by the data handler. For example, 5GC NFs/AFs/OAM, defined in 3GPP, can be the other network entity which generates monitoring data can be the other (further) network entity of the data handler, e.g., NWDAF.

In a further embodiment of the first aspect, the data handler is configured to obtain a second data identifier as the at least one further data identifier, the second data identifier relating to monitoring data to be collected from or by a second network entity, the second network entity being one of the other network entities wherein the data handler is configured to obtain the second data identifier, in particular before receiving the first data request.

In particular, the data handler is configured to obtain the second data identifier relating to monitoring data from the second network entity in a static and/or dynamic way. In a static way, the data handler configures and stores the second data identifiers in coordination with data producer(s). In a dynamic way, the data handler may use request/response pattern or service based architecture and/or via a third party network entity to obtain the second data identifier from one or more other network entities.

In a further embodiment of the first aspect, the data handler is configured to generate the first data identifier, and to transmit the first data identifier towards the first network entity, in particular before receiving the respective data request.

For example, the data handler is configured to generate the first data identifier which is used to identify a specific information provided by the data handler. The list of the first data identifiers will be exchanged with the consumers of the data handler in a static way or dynamic way.

The identifier can be a word, number, letter, symbol, or any combination of those. The first data identifier is used to obtain information provided by the data handler. To support the data consumers (e.g., 5G NFs/AFs/OAM) of the information provided by a data handler, the data handler should provide the list of first data identifier(s) to data consumers. The data handler configures and/or generates a first data identifier to identify the type of supported data. A data consumer uses the first data identifier when requesting data to data handler. In particular, Analytics ID, wherein Analytics ID is the first data identifier, is used to obtain Analytics information provided by NWDAF, wherein NWDAF is the data handler. NWDAF should provide the list of Analytics ID(s) that it supports to data consumers (including 5G NFs/AFs/OAM defined in 3GPP). Each data consumer (e.g., SMF) uses the specific Analytics ID for requesting analytics information to NWDAF. The Analytics ID can be set to, for example, "Network Performance" and/or "UE Mobility" and/or "UE Communication" and/or "NF load information".

In an further embodiment of the first aspect, the data handler is configured to associate the first data identifier with at least one data collection parameter in order to associate the first data identifier with the monitoring data to be collected, wherein the at least one data collection parameter is the second data identifier and indicates which data compose the monitoring data or a specific subset of monitoring data.

In particular, the data handler associates the initial configuration of the mapping of which specific information requires which specific monitoring data from monitoring data producer(s). In particular, the data handler generates the association information by creating a mapping table of which requested information and/or monitoring data requires which second data identifiers from monitoring data producer(s).

In a further embodiment of the first aspect, the first identifier is formed by and/or comprises at least one of the following identifiers: data exposure identifier, in particular a data analytics identifier relating to data analytics information and wherein the second identifier is formed by and/or comprises at least one of the following identifiers: event identifier, in particular identifier relating to monitoring data to be collected from the second network entity, for example, the event identifier or Event ID can be set to, for example, "UE reachability" and/or "Roaming status " from 5G NFs.

In a further embodiment of the first aspect, the first data request further comprises a filter information, in particular filtering a geographical area and/or a threshold value associated with the first identifier , and/or data reporting information and/or target of data reporting indication and, wherein the further data request further comprises a filter information, in particular filtering a geographical area and/or threshold value associated with the second identifier, and/or data reporting information and/or target of data reporting indication.

In an further embodiment of the first aspect, the data handler is a network data analytics function (NWDAF) entity, wherein the first network entity is a NWDAF service consumer, wherein the data handler is configured to receive the first data request, the first data request indicating a request and/or subscription of analytics information, wherein the first data identifier is an analytics identifier, wherein the processor is configured to generates the association information by creating a mapping table of the analytics identifier and/or the first data request with the data to be collected as the monitoring data, wherein the monitoring data to be collected is associated with monitoring parameters, such as at least one event identifier and/or event filter information and/or event reporting information and/or target of data reporting indication, and wherein the data handler is configured to decide whether to trigger and/or update the data collection from the one of more other network entities if a new subscription of analytics information is necessary, or whether the requested analytics information is already provided to the data handler upon the basis of an already existing subscription of analytics information from at the one or more other network entities.

In particular, after receiving of the data request from a consumer, the NWDAF performs the association information

The NWDAF associates Event ID(s) to Analytics ID(s) for the specific request and/or subscription to Analytics information, so that:
- One Event ID for a specific data request information (e.g., Event instance ID) can be associated with multiple Analytics Instance IDs;
- One Analytics ID for a specific data request information (e.g., Analytics instance ID) can be associated with multiple (unique) Event IDs for specific data request information;
- When NWDAF receives a new request/subscription to Analytics information (e.g., indicated by Analytics ID); NWDAF only creates a Analytics ID for a specific data request information (e.g., Analytics Instance ID), if no existing Analytics ID can support the new request/subscription;
- When a new Analytics ID for a specific data request information (e.g., Analytics Instance ID) is created by NWDAF; NWDAF only creates new Event ID for a specific data request information (e.g., Event Instance ID(s)) if the existing Event IDs cannot be used.

The NWDAF may generate Analytics ID for a specific data request information (e.g., Analytics instance ID) and one or more Event IDs for a specific data request information (e.g., Event instance IDs) for the data to be collected for a specific data request by Analytics consumers. An example of Event instance ID can be related to the association of Event ID and/or Event Filter information and/or Event Reporting information and/or Target of Event Reporting. An example of Analytics instance ID can be relating to the association of the Analytics ID and/or Analytics Filter information and/or reporting information and/or target of Analytics reporting information.

The NWDAF may perform the association information by creating a mapping table of the Analytics information request and/or subscription of specific data request and/or subscription to Analytics information with the associated Event identifier(s).

NWDAF may perform the association information by creating a mapping table of the Event identifier of a specific monitoring data to be collected for the specific data request information with the associated request and/or subscription to Analytics information (e.g., Analytics ID(s)).

In a further embodiment of the first aspect, the data handler is a network data analytics function (NWDAF) entity, wherein the first network entity is a NWDAF service consumer, wherein the data handler is configured to receive a subscription termination request from the first network entity, the subscription termination request indicating a termination of a subscription of analytics information, wherein the data handler is configured to terminate a transmission of monitoring data relating to the terminated subscription to the first network entity, wherein the data handler is configured to modify the association of the subscription request from the first network entity and monitoring data to be collected or wherein data handler is configured to delete the association of the subscription request from the first network entity and monitoring data to be collected.

In a further embodiment of the first aspect, the data handler is configured to determine a data collection process in order to collect data from the one or more other network entities in order to obtain the monitoring data.

In a further embodiment of the first aspect, the data handler is configured to determine the one or more other network entities from which data should be collected to obtain the monitoring data upon the basis of the received first data request and/or the first data identifier.

In a further embodiment of the first aspect, the data handler is configured to receive the one or more second data identifier from the one or more other network entities, wherein the one or more second data identifier identifies the monitoring data to be collected from one or more other network entities;

In a further embodiment of the first aspect, the data handler is configured to communicate in a 5G communication network.

According to a second aspect, the invention relates to a data handling method as set out in claim 14.

The data handling method can be implemented by the data handler of the first aspect.

### BRIEF DESCRIPTION OF THE DRAWINGS

Further embodiments of the invention will be described in the following with respect to the following figures, in which:
Fig. 1 shows a data handler in a communication scenario;
Fig. 2 shows the data handler in a communication scenario;
Fig. 3A-3D show operations and services in a communication scenario;
Fig. 4 shows the data handler in a communication scenario;
Fig. 5 shows the data handler in a communication scenario;
Fig. 6 shows the data handler in a communication scenario;
Fig. 7 shows the data handler in a communication scenario;
Fig. 8 shows an operation of the data handler in a communication scenario;
Fig. 9 shows an operation of the data handler in a communication scenario;
Fig. 10 shows an operation of the data handler in a communication scenario;
Fig. 11 shows a difference between a traditional approach and the approach according to some embodiments;
Fig. 12 shows a difference between a traditional approach and the approach according to some embodiments; and
Fig. 13 shows a diagram of a data handling method.

### DETAILED DESCRIPTION OF THE EMBODIMENTS

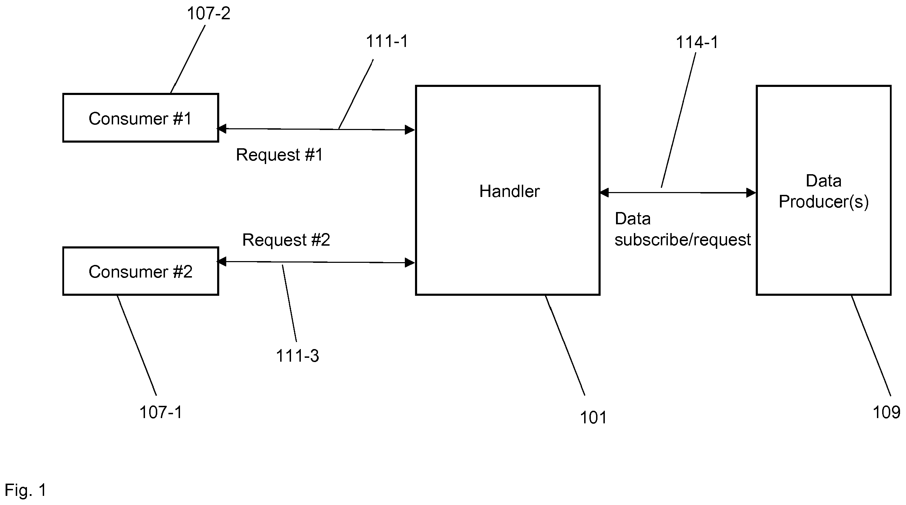

Fig 1. Shows a communication scenario with a data handler 101 being configured to handle monitoring data among network entities 107-1, 107-2. The data handler 101 is connected to a first network entity 107-1 by a connection 111-1. By way of example, Fig. 1 also shows a connection 111-2 between the data handler 101 and another first network entity 107-2. The description relating to the first network entity applies correspondingly to the second entity 107-2. The data handler 101 communicates with the data producer 109 over a connection 114-1.

The connections 111-x, 114-x can be network connections corresponding to 5G.

The data handler 101 is configured to: obtain a first data request over the connection 111-1 from a first network entity 107-1, the first data request comprising a first data identifier, the first data identifier relating to monitoring data, obtain one or more second data identifier from one or more other network entities 109, wherein the one or more second data identifier is related to the monitoring data to be collected from one or more other network entities 109, generate association information based on the first data identifier and the one or more second data identifier; and determine, based on the association information, whether the monitoring data to be collected is already available at the data handler, or determine whether the monitoring data to be collected should be collected from the one or more other network entities by the data handler 101.

The second network entity 107-2 can transmit over the connection 111-2 a second data request comprising a further data identifier, which can be identical to or different from the first identifier to request monitoring data. The data handler 101 handles the second request in the same was as it handles the first request.

The network entities 107-1, 107-2 form consumers of monitoring data, whereas the network entity 109 forms a producer of monitoring data. The entities 107-1, 107-2 and 109 can be network functions NF, and can be arranged in the same or in a different network plane, such as control plane (CP), user plane (UP) or management plane (MP).

The data handler can be implemented as a service within a network entity, or as a network entity. The data handler can be a network entity or a network device or a network component, wherein a network entity or a network device can be a physical or logical entity. For example, the data handler can be a Network Data Analytics Function (NWDAF) as e.g. defined in 3GPP. The data handler can be Operation and Management (OAM) or Management Data Analytics Function (MDAF) defined in 3GPP. The data handler can also be Network Exposure Function (NEF).

In an embodiment, the data handler 101 efficiently supports can be supported monitoring task management e.g. the 5G system (5GS) between data consumer NFs 107-1, 107-2 and Data Producer NFs 109 in order to avoid unnecessary signaling for data collection and unnecessary data transfer.

In an embodiment, the data handler 101 supports the 5GS to efficiently reuse monitoring services across CP, UP and MP.

In an embodiment, the data handler 101 supports the 5GC by providing an efficient monitoring service between data consumer NFs 107-1, 107-2 and Data Producer NFs 109.

In an embodiment, the data handler 101 efficiently coordinates in the 5GS and non-3GPP systems monitoring services.

In an embodiment, the data handler 101 reduces data collection time to meet the requirements of Verticals, e.g., URLLC service, e.g.in the 5GS.

In an embodiment, the data handler 101 can provide Monitoring as a Service (MaaS) functionality which can support
- monitoring service and task management between data producers 109 and data consumers 107-1, 107-2.
- a reusable monitoring service model between ANY data producers 109 and data consumers 107-1, 107-2 and/or for User Plane (UP), Control Plane (CP), and Management Plane (MP) and/or for the integration of Control Plane (CP) and Management Plane (MP) and/or for E2E monitoring service across technical/administrative domains and/or for E2E monitoring service coordination with non-3GPP systems.

In an embodiment, the data handler 101 supports MaaS Producer, MaaS consumer, or MaaS Discovery/Registry. The term MaaS relates to the monitoring as a service to the network entities involved which is provided by the data handler 101.

In an embodiment, the data handler 101 enables 5GS to support monitoring service and task management covering CP, UP and MP.

In an embodiment, the data handler 101 enables 5GS to support a faster way of monitoring data collection for URLLC applications.

In an embodiment, the data handler 101 enables 5GS to integrate legacy systems, 3^{rd} parties and/or non-3GPP systems for the monitoring data exposure and task management.
(i) by providing the following MaaS features composed by MaaS functionalities
   ▪ The MaaS Producer for the producer of monitoring data
   ▪ The MaaS Consumer for the consumer of monitoring data
   ▪ The MaaS Discovery/Registry for the broker service of monitoring data
   ▪ The MaaS Task Manager for the handling of monitoring tasks
(ii) by providing Services provided by MaaS Task Manager functionalities, in particular,
   ▪ data collection task control/management between Producer(s) and Consumer(s) to avoid unnecessary signaling of data subscription/request or unnecessary data transfer
(iii) by providing a service interface.

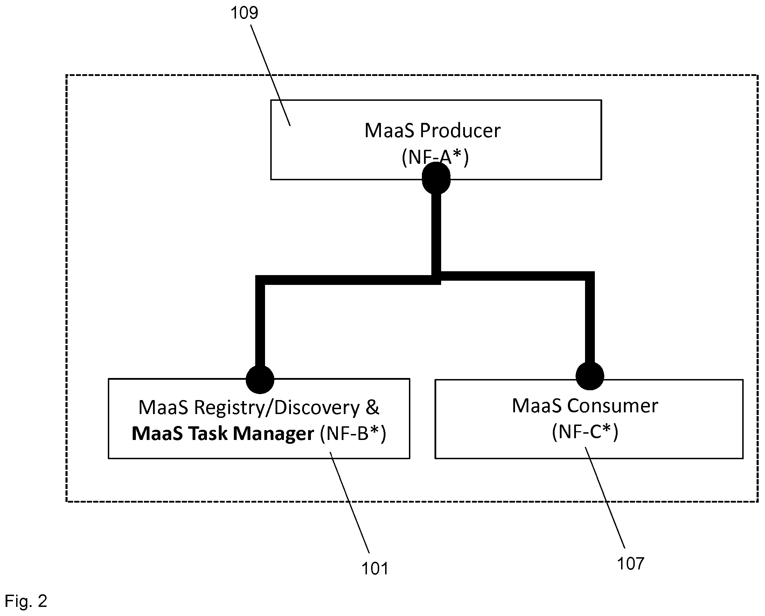

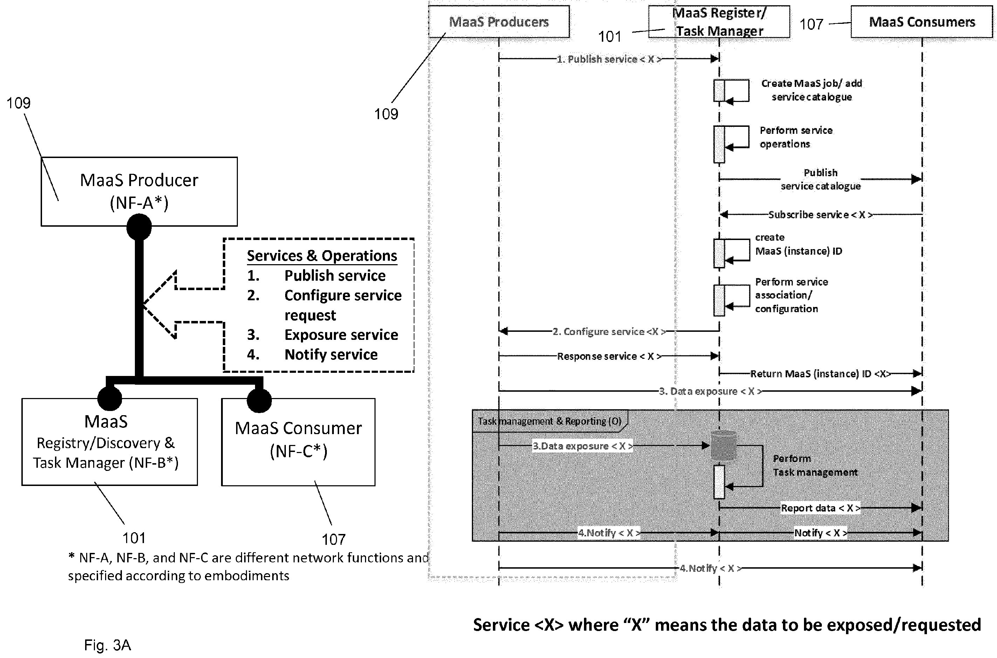

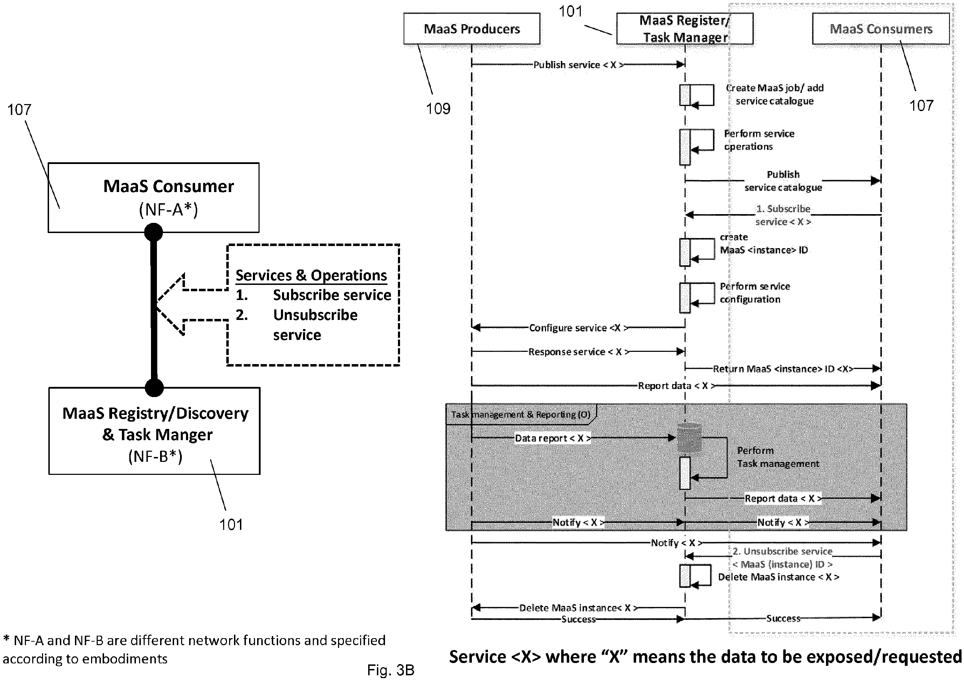

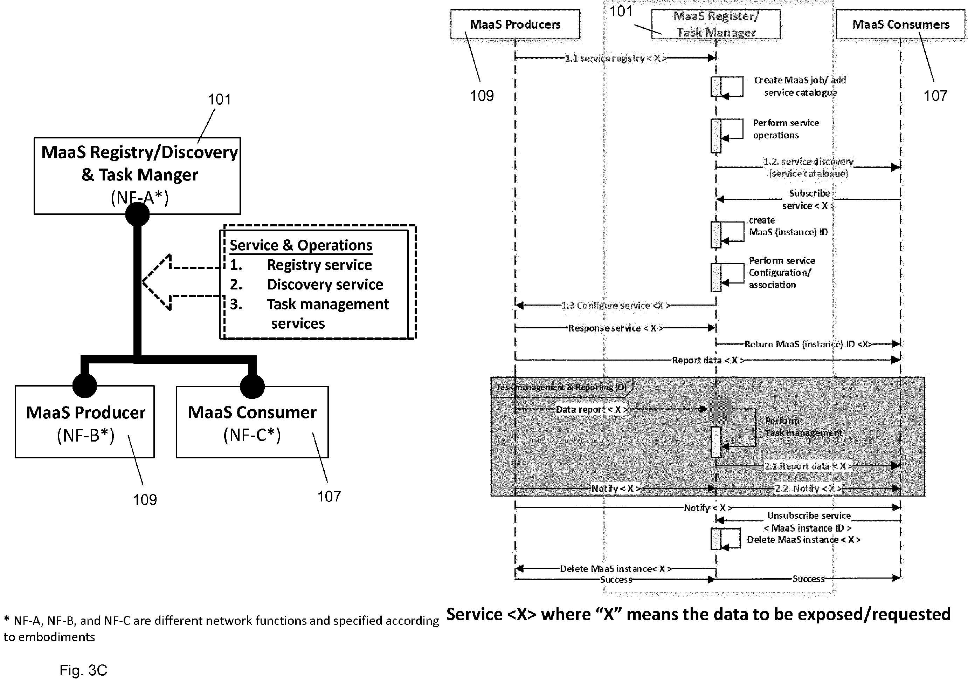

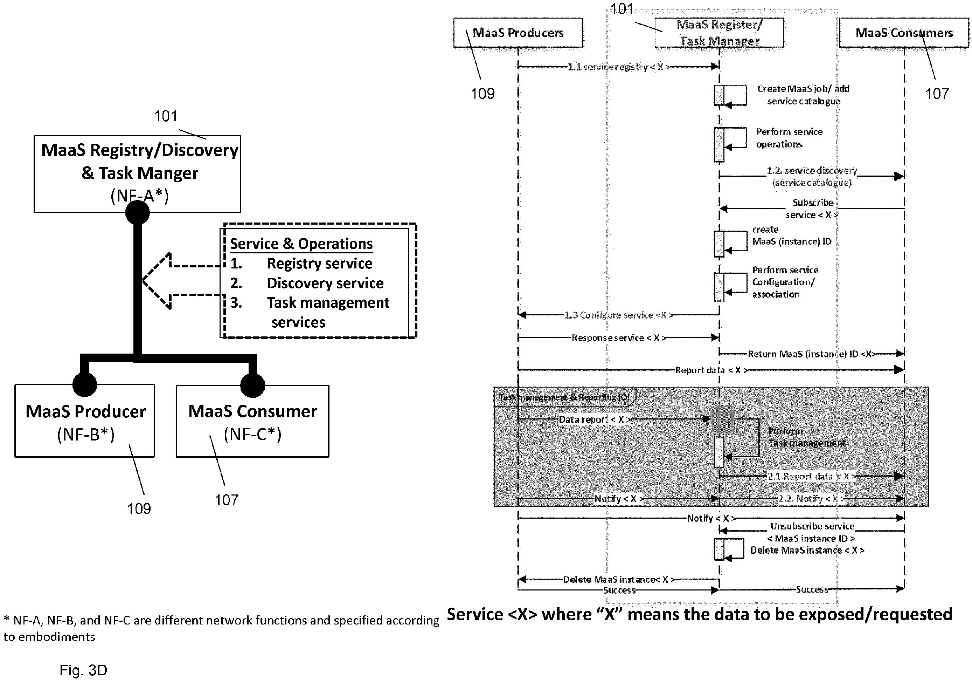

Further embodiments of MaaS features composed by MaaS functionalities are described with reference to Figs. 2, 3A-3D, showing embodiments of services and operations.

Each MaaS feature can be composed of the services provided by MaaS functionalities.

The MaaS Producer functionalities are proposed for data producers 109. Any Network Function (NF) at CP, UP and MP which produces monitoring data may require the producer functionalities to support any network entities requested for monitoring data. As shown in Fig. 2, the services of MaaS producer 109 can be as follows
➢ Service P#1: Publish, and related template
➢ Service P#2: Configure, and related template
➢ Service P#3: Notify, and related template
➢ Service P#4: Exposure, and related template

In the following table, each service related to MaaS Producer (P#1 - P#4) are listed together with the parameters required to create the service. For example, the parameters required to create a Publish service include but are not limited to service information, the list of measureable KPIs with thresholds, reporting related information, priority, etc as described in the following. Together with these parameters, a template for publish service can be created.

The MaaS Producer services (P#1 - P#4) with the required parameters to create service templates are listed in the following table.

| **Operation** | **Capabilities** | | **Parameters** | | **Return Value(s)** | |
|---|---|---|---|---|---|---|
| Publish | | - Publish monitoring service for the specific (set of) measurement type/name/KPIs | | - service Name/ID | | - Monitoring as a service ID (MaaS ID) |
| | | | | - Source of service | | |
| | | | | - a list of measurement type/names/KPIs | | |
| | | | | (Example: latency, throughput, #packet loss, #registered subscribers, #PDU session, etc) | | |
| | | | | - the thresholds of measurement type/name (O) | | |
| | | | | - the related data of the instance (Example: slice identifiers, NSI/NSSI/NF info...) | | |
| | | | | - reporting method (Example: data file or data streaming) | | |
| | | | | - granularity period (Example: Milliseconds to Hours) | | |
| | | | | - reporting period (Example: Milliseconds to Years) | | |
| | | | | - priority (O) (Example: high/low/middle) | | |
| Configure | | - Configure service request | | - Service Name/ID | Success/ Failure | |
| | | | | - Monitoring service ID (MaaS-ID) | | |
| | | | | - Measurement type/name to be filtered (O) | | |
| | | | | - Change thresholds of measurement type/name (O) | | |
| | | | | - Update the related data of the instance (O) | | |
| | | | | - Update data reporting granularity (Example: Millisecond to Hours) | | |
| | | | | - Update reporting period (Example: Days to Month) | | |
| | | | | - Change priority (Example: low to middle) (O) | | |
| Exposure | | - Data reporting | | - Monitoring service ID (MaaS-ID) | Data file or Data streaming | |
| | | | | - (List of) measurement type/name | | |
| | | | | - (List of) value | | |
| | | | | - Timestamp | | |
| | | | | - Unit | | |
| Notify | | - Notification of the thresholds crossed alarms | | - Monitoring service ID (MaaS-ID) | Success/Failure | |
| | | | | - KPI name | | |
| | | | | - Thresholds crossed value | | |
| | | | | - Timestamp | | |
| | | | | - Unit | | |

The MaaS Consumer functionalities are proposed for data consumer 107. Any Network Function (NF) at CP, UP and MP which consumes monitoring data may require the Consumer functionalities to request for monitoring data.

In an embodiment, the services of MaaS Consumer 107 are
➢ Service C#1: Subscribe, and related template
➢ Service C#2: Unsubscribe, and related template

In the following table, each service related to MaaS Consumer 107 are listed together with the parameters required to create the service. The services to support MaaS Consumer feature include Subscribe and Unsubscribe. For example, the parameters required to create a Subscribe service include but are not limited to service information, the list of requested KPIs with thresholds for the notification, reporting related information, priority, etc as described in the following table showing MaaS Consumer service and operations with input parameters and return value(s). The MaaS Consumer services (C#1 - C#2) with the required parameters to create service templates are listed in the following table.

| **Operation** | **Capabilities** | **Parameters** | **Return Value** |
|---|---|---|---|
| Subscribe | - Subscribe to a service | - service Name/ID | MaaS instance ID |
| | | - consumer Name/ID | |
| | | - a list of measurement type/name (M) | |
| | | (Example: latency, throughput, #packet loss, #registered subscribers, #PDU session, etc) | |
| | | - the thresholds of measurement type/name (**O**) | |
| | | - the related data of the instance (Example: slice identifiers, NSI-ID/NSSI-ID/...) | |
| | | - reporting method (Example: data file or data streaming) | |
| | | - granularity period (Example: Milliseconds to Hours) | |
| | | - reporting period (Example: Miliseconds to Years) | |
| | | - priority (**O**) (Example: high/low/middle) | |
| Unsubscribe | -Release subscription to a service | - MaaS instance ID | Success/Failure |

In an embodiment, MaaS Registry/Discovery can be performed.

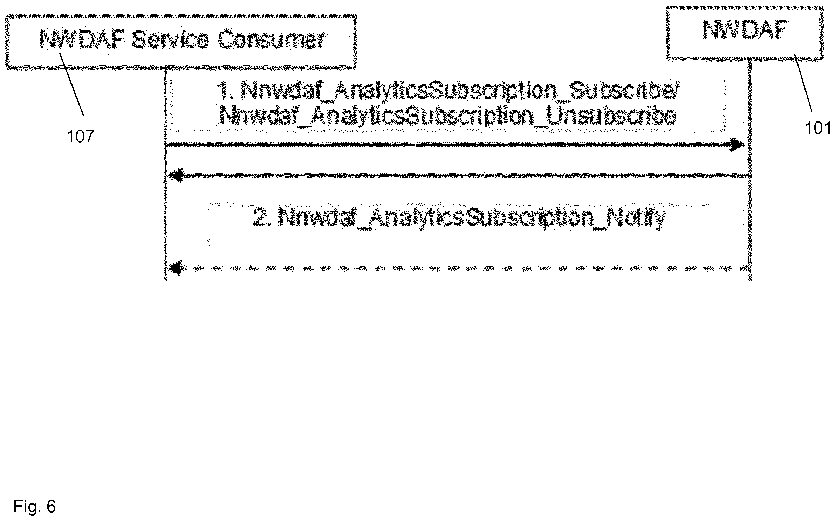

The MaaS Registry/Discovery functionalities are proposed to support the registration and discovery service between MaaS Producer and MaaS Consumer. MaaS Registry/Discovery functionalities allows how MaaS Producer can register and how MaaS Consumer can discover the monitoring data. Similar to the broker service, this functionality allows the discovery and registration of monitoring service between data Producers and data consumers. As illustrated in Figure 6, the fundamental services of MaaS Registry/Discovery are
➢ Service R#1: Register, and related template
➢ Service R#2: Discovery, and related template

In the following table, each service related to MaaS Registry/Discovery (R#1 - R#2) are listed together with sub-services (job). The registry service is related to the publish service of MaaS Producer. The Publish service from MaaS Producer is received by MaaS Registry/Discovery to register the service. The registration of the Publish service includes but is not limited to create a number of jobs (e.g., create/delete MaaS job) by MaaS Registry/Discovery. After creation of the MaaS job of the Registry service for the particular Publish Service, the associated MaaS ID will be returned. A similar procedure performs to MaaS Consumer to register MaaS service instance. In this case, the related operation is the subscribe/unsubscribe services from MaaS Consumer to create/update/delete MaaS instance supported by Registry service.

The Discovery service provides the available MaaS service catalogue, updating the service catalogue and the mapping of the service information (e.g., service name, source, MaaS ID, measurable KPIs). The required parameters for the associated jobs of Registry and Discovery are listed in the following table.

| **Operation** | **Capabilities** | **Parameters** | **Related Operations** | **Return Values (s)** |
|---|---|---|---|---|
| Registry | Create MaaS job | - Service Name/ID | Publish service of MaaS Producer | MaaS ID |
| | | - Source of service | | |
| | | - KPIs | | |
| | Create MaaS Instance | - MaaS ID | Subscribe service of MaaS Consumer | MaaS Instance ID |
| | | - Consumer Info | | |
| | | - Consumer's service request Info | | |
| | Update MaaS Instance | -MaaS Instance ID | | Success/Failure |
| | | - Consumer's service update Info | | |
| | Delete MaaS job | - MaaS ID | Configure service of MaaS Producer | Success/Failure |
| | Delete MaaS Instance | - MaaS Instance ID | Unsubscribe service of MaaS Consumer | Success/Failure |
| Discovery | Publish MaaS services | - Service catalogue | ... | ... |
| | Create service catalogue | - Service Name/ID | ... | Service catalogue |
| | | - Producer Info | | |
| | | - MaaS ID | | |
| | | - KPIs | | |
| | Map MaaS service with Keys | - Service Name/ID | ... | Service mapping |
| | | - Source of service | | |
| | | - MaaS ID | | |
| | | - KPIs | | |

The MaaS Task Manager can be implemented by the data handler 101. The functionalities of the MaaS Task Manager 101 are proposed to support between MaaS Producer and MaaS Consumer. MaaS Task Manager functionalities support how the monitoring data can be managed further between MaaS Producer and MaaS Consumer. For example, if two data consumers subscribe the same monitoring data from the same Monitoring data Producer, a single data reporting is needed from MaaS Producer instead of two data reporting stream. The task manager manages the optimization of data handling task between MaaS Producer and Consumers, e.g., configuration tasks, optimize in data reporting, etc.

In an example, the services of MaaS Task Manager 101 are
➢ Service TM#1: Configure, and related template
➢ Service TM#2: Notify, and related template

Basically, task management considers i) configuration and ii) notification. The configure service includes the capabilities of managing the subscribe tasks from the same consumer and/or managing the publish tasks from the same producer. Notify service is related to the data reporting to the consumer and query data from the Repository X. The services and related operations of MaaS Task Manager are summarized in the following table:

| **Operation** | **Capabilities** | **Parameters** | **Related Operations** | **Return Values (s)** |
|---|---|---|---|---|
| Configure same MaaS service request from different consumers | Obtain the subscribe/unsubscribe or fetch for the same MaaS request from multiple consumers | - MaaS ID/ MaaS instance ID | Task Management | Success/Failure |
| | | - Producer Info/ Consumer Info | | |
| | filter whether the (similar) MaaS subscribe/fetch request is already available | - MaaS ID | | |
| | Configure/Update the subscribe/unsubscribe or fetch for the same MaaS request from multiple consumers | | | |
| | Associate the running MaaS ID with the list of MaaS instance ID | - MaaS ID | | |
| | | - MaaS Instance IDs | | |
| | Store data from data producers | - MaaS ID | Task Management/ Report | Success/Failure |
| | | - Producer Info | | |
| | | - KPIs | | |
| Configure MaaS service requests from same consumers | from the same consumer or the publishes from the same producer | | | |
| Notify | Optimize querying data for the data reporting | - MaaS ID | Task Management/ Report | Data file or Data streaming |
| | | - MaaS instance IDs | | |
| | | - KPIs | | |
| | Query data from the repository X | - MaaS ID | Task Management | Data file |
| | | - MaaS instance ID | | |
| | | - Consumer Info | | |

In an embodiment, a service interface between MaaS Producer 109 and MaaS Registry/Discovery and Task Manager 101 and/or between MaaS Consumer 1ß7 and MaaS Registry/Discovery and Task Manager 101 can be translated into service operations (i.e., service based architecture). Example service operations are supported by MaaS functional components (MaaS Producer, MaaS Consumer, MaaS Registry/Discovery, MaaS Task Manager) described in the table above.

In some embodiments, a reusable and generic monitoring framework composed by Monitoring service (MaaS) for Network and Network Slicing in 5GS covering CP, UP and MP are provided. In addition, the features are extensible to cover the monitoring service from(to) 5GS to(from) 3^{rd} Parties (e.g., Application Functions (AF) defined by 3GPP) and/or legacy systems and/or non-3GPP systems (e.g., Transport Network (TN)).

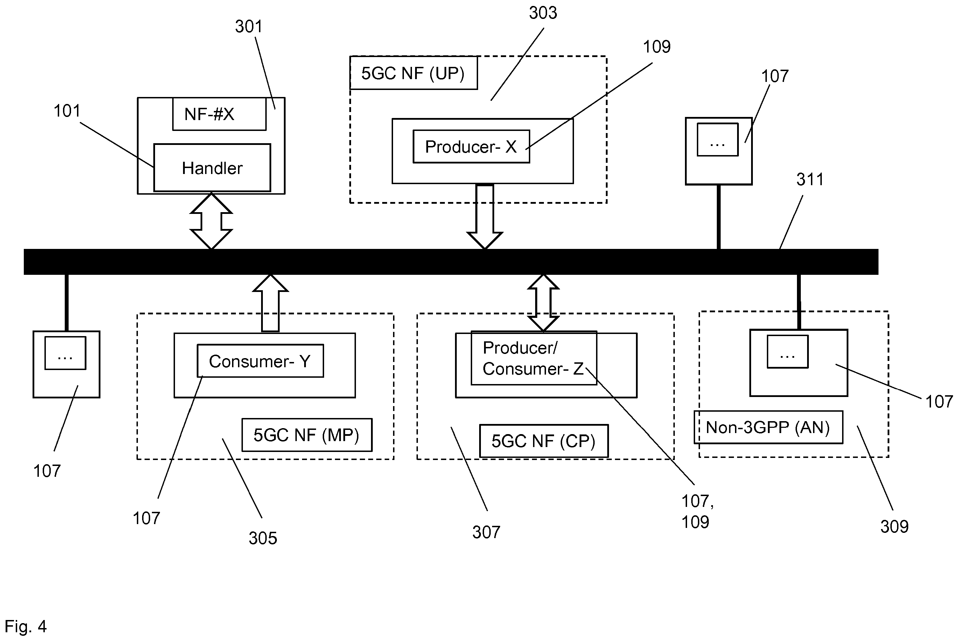

Figure 4 shows a generic model of MaaS to support monitoring services between 5GC NFs at MP, UP and CP including non-3GPP network (e.g., Access Network (AN)). The features of MaaS composed by MaaS functionalities can include the followings:
- MaaS F1: MaaS Producer
- MaaS F2: MasS Consumer
- MaaS F3: MaaS Registry/Discovery
- MaaS F4: MaaS Task Manager

The services described above are enabled by the data handler 101, which can be implemented as a MaaS Task Manager.

The MaaS Task Manager as shown in Fig. 4 is in some embodiments a network entity which can be considered as (i) an individual network entity for 5G System (5GS) and/or (ii) can be co-located with one or more network functions or network entities of 5GS.

The exemplary functionalities of Task Manager 101 are:
- obtaining the first request from data consumer(s) 107, such as 107-1, 107-2, with input parameters about data to be collected.
- associating the mapping of the request from data consumers with the required data to be collected from the associated data producers 109.
- processing the request between data consumers 107 and data Producers 109.

The processing of the request between data consumers 107 and data Producers 109 can include but is not limited to the followings:
- identify/check if there is the (similar or) same MaaS subscription and/or fetch requests already
- if the same subscription is available, no new subscription is created and exposed
- otherwise, create a new subscription and/or modify the existing subscription

For example, modify request can be sent to the MaaS Producer(s) 109 if the similar request is received for the same data to be collected, example, with different reporting period or reporting granularity or filter information which do not required new subscription.

In addition, the MaaS Task Manager 101 may use local identifiers for the better control of the association between the request and data to be collected. In particular, MaaS Task Manager 101 can
- generate a local identifier to identify an occurrence/instance of a request ID that MaaS Task Manager 101 can generate with its specific set of Request's Filter Information and Event Reporting
- generate local identifier(s) to identify an occurrence/instance of a request for an Data collection ID from data Producer(s) with its specific set of filter Information and event Reporting

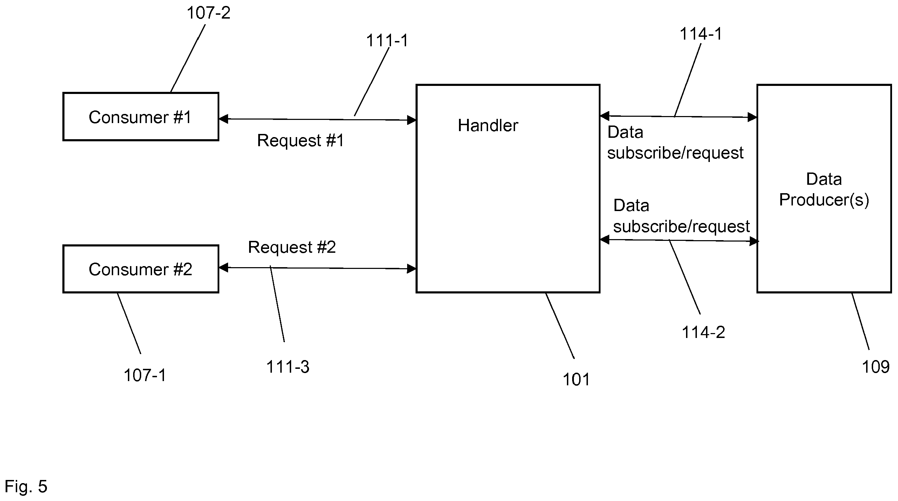

In the embodiment shown in Fig. 5, the first network entity 107-1 can transmit its data request along with a filter X for filtering and optionally data A. The second network entity 107-2 can transmit its data request along with a filter Y for filtering and optionally data A. The MaaS task manager 101 may use local identifiers for a better control of the association between the request and data to be collected. The data A and the filter X can be send to the MaaS producer 109 via the link 114-1, wherein the data A and the filter Y can be send via the ling 114-2 to the MaaS producer 109.

The local identifiers based on MaaS ID and Event ID can be as follows:
- MaaS ID: Identifies the request from MaaS Consumer 107 that MaaS Task Manager 101 can generate
- MaaS instance ID: Identifies an occurrence/instance of a request for an MaaS ID that MaaS Task Manager 101 can generate with its specific set of Filter Information and Event Reporting <local identifier>
- Event ID: Identifies the request to MaaS Producer 109 that MaaS Task Manager 101 can be used to collect Data
- Event instance ID: Identifies an occurrence/instance of a MaaS request for an Event ID from MaaS producers (e.g., NFs/Afs/OAM) with its specific set of Event Filter Information and Event Reporting <local identifier>

In an embodiment, the MaaS Task Manager 101 associates Event Instance IDs to MaaS Instance IDs, so that:
➢ One Event Instance ID can be associated with multiple MaaS Instance IDs;
➢ One MaaS Instance ID can be associated with multiple (unique) Event Instance IDs;
➢ When Task Manager receives a new request/subscription to MaaS ID; Task Manager only creates a MaaS Instance ID, if no existing MaaS Instance ID can support the new request/subscription;
➢ When a new MaaS Instance ID is created by Task Manager; Task Manager only creates new Event Instance IDs if the existing Event Instance IDs cannot be used.

By providing data collection task control/management, the MaaS Task Manager can support unnecessary signaling for event exposure subscription/request or unnecessary data transfers in the following scenarios:
In another embodiment which can be handled by the example shown in Fig. 5, the same (or similar) MaaS service requests (or subscriptions) can be managed by consumers 107 which includes the same type of data collection from the same data producer(s). In the case of similar request, e.g., the data collection and/or reporting granularity might be different for the same data. The MaaS Task Manager 101 receives the same requests from MaaS Consumers 107 and triggers multiple time of data collection for the same type of data from MaaS Producer(s).

The first network entity 107-1, i.e. a MaaS Consumer, communicates over the link 111-1 e.g. Info A subscription request or response. The second network entity 107-2, i.e. a MaaS Consumer, communicates over the link 111-2 e.g. Info A subscription request or response.

The data handler 101 forming the MaaS Task Manager communicates over link 114-1 and over link 114-1 Event Exposure Subscribe and Request/Response for data X.

In another embodiment which can be handled by the example shown in Fig. 5, the MaaS Task Manager 101 receives different Analytics requests from MaaS Consumers 107-1, 107-2, and triggers multiple time of data collection for the same type of data from MaaS Producer(s) 109. Thereby, different MaaS service requests (or subscriptions) by consumers 107, i.e. 107-1, 107-2, are supported which includes obtaining the same type of data collection from the same data producer 109.

The first network entity 107-1, i.e. a MaaS Consumer, communicates over the link 111-1 e.g. Info B subscription request or response. The second network entity 107-2, i.e. a MaaS Consumer, communicates over the link 111-2 e.g. Info C subscription request or response.

The data handler 101 forming the MaaS Task Manager communicates over link 114-1 and over link 114-2 Event Exposure Subscribe and Request/Response for data Y towards the MaaS Producer 109.

In another embodiment which can be handled by the example shown in Fig. 5, the MaaS Task Manager 101 receives different Analytics requests from a specific MaaS Consumer 107-1, 107-2 and triggers multiple time of data exposure responds to MaaS Consumer(s) 107-1, 107-2. Thereby, the MaaS Task Manager 101 manages different MaaS service requests (or subscriptions) by a specific consumers to synchronize/optimize data collection from MaaS data producer(s) with different data reporting granularity.

The first network entity 107-1, i.e. a MaaS Consumer, communicates over the link 111-1 e.g. Info A subscription request or response. The second network entity 107-2, i.e. a MaaS Consumer, communicates over the link 111-2 e.g. Info B subscription request or response.

The data handler 101 forming the MaaS Task Manager communicates only over the link 114-1 Data A Subscribe and Request/Response and Data B Subscribe and Request/Response towards the MaaS Producer 109.

In an embodiment association between Analytics subscriptions and triggers of data collection e.g. for 3GPP SA2 TS23.288 can be handled. There exists two types of Analytics subscriptions defined according to 3GPP SA2/SA5:
1. Subscribe/Notify,
2. Fetch Request/Response.

The procedures for association between Analytics subscriptions and triggers of data collection are described below according to some embodiments.

In the following procedures are disclosed with reference to Fig. 5 how Network Data Analytics Functions (NWDAF) defined by 3GPP SA2 can use MaaS Task Manager 101 to control data collection procedure to avoid unnecessary signaling for data subscription and unnecessary data transfer.

The first and second network entity 107-1, 107-2 can form Network Functions (NF#1 and NF#2) which request the same analytics request to NWDAF being formed by the data handler 101, which required the same data to be collected from different data sources (e.g., NFs/AFs/OAM). Here AF is application function defined in 3GPP and OAM is operation and management functionalities defined by 3GPP SA5.

The procedures of steps 1-3 are according to an embodiment as follows:
1. The NWDAF 101 receives the request from MaaS Consumer (NF#1) 107-1. The request contains (but is not limited to) the MaaS consumer information (e.g., consumer ID), the requested MaaS service information (e.g., request IDs), information about Data to be Collected, monitoring data, for the request (e.g., Event IDs for MaaS Producer(s)) filter information
2. The NWDAF 101 associates the mapping among consumer information, requested Analytics IDs, Input Data to be Collected (e.g., Event IDs for NFs/AFs/OAM)
   a. Optionally, during the mapping, the NWDAF 101 may generate Analytics instance IDs and/or Event instance IDs to be able to support a better control of data collection Task, so that
      - One Event Instance ID can be associated with multiple Analytics Instance IDs;
      - One Analytics Instance ID can be associated with multiple (unique) Event Instance IDs;
3. The NWDAF 101 operates with data collection Task Manager functionality to control the association between requested Analytics ID and associated data collection so to avoid unnecessary signaling for data collection
   a. If no existing Analytics (instance) ID and/or Event (instance) ID can support the new request/subscription, then the NWDAF 101 creates a new data subscription/request (e.g., from NF#1) and/or modifies the existing subscription/request to the associated NFs/AFs/OAM for the Data to be collected with the required filtered information.

Otherwise, the NWDAF 101 will not create new data subscription/request to the associated NFs/AFs/OAM to avoid unnecessary signaling for data collection. This is the case where the request from the second network entity 107-1, NF#2, is the same as the second network entity 107-1, NF#1, and the subscription for the required data for NF#1 107-1 has been already established-

In an extension of the embodiment as shown in Fig. 5, in addition to the network entities 107-1, 107-2, a third network entity NF#3 not shown in Fig. 5 can be present as analytics consumer entity.

Some embodiments of data collection task control at the NWDAF 101 are deploy three requests from different Analytics consumers, NF#1, 107-1, NF#2, 107-2 and NF#3, not shown in Fig. 5. This may require common data collection from specific data source (e.g., NFs/AFs/OAM).

The order of the request is as follows: NF#1 -> NF#2 -> NF#3.

Step 1: The NF#1 107-1 has been requested, the NWDAF 101 creates the association/mapping among the subscribers, the analytics IDs, the data to be collected. The NWDAF 101 sends the exposure request for Event ID {1,4} to the corresponding data producers (NFs/AFs/OAM).

Example of created association (or mapping entry): Subscriber NF#1: Analytics ID#2 <-> Event ID {1,4} + <Filter for ID #4-1>

Step 2: The NWDAF 101 receives the same request from NF#2 107-2. The NWDAF 101 operates data collection task control and found the same request with the same data to be collected with the same filter information, therefore, decides no subscription (or exposure request) is necessary.

Step 3: The NWDAF 101 receives a request from NF#3 (not shown) which requires the common data collection of Event ID-4. The NWDAF 101 creates the association/mapping among the subscribers, the analytics IDs and the data to be collected. For Event ID-4, the exposure request has already established. Thus, The NWDAF 101 only sends the exposure request for Event ID-2 to the corresponding data procedures (NFs/AFs/OAM).

Example of created association (or mapping entry): Subscriber NF#3: Analytics ID#5 <-> Event ID {2,4} + <Filter for ID #4-1>

With reference to all embodiments descried herein, a data exposure identifier can be identifier that is used to identify the type of supported data that Network data handler can generate. To support the data consumers (e.g., 5G NFs/AFs/OAM) a Network data handler should provide the list of data exposure ID(s) to data consumers. A data consumer use the corresponding data exposure identifier when requesting data to Network data handler 101.

For example, The NWDAF being formed by the data handler 101 may provide the list of Analytics ID(s), e.g. data exposure identifier, that it supports to data consumers (e.g. 5G NFs/AFs/OAM) 107. Each data consumer 107 (e.g., SMF) can use the specific Analytics ID for requesting analytics information to NWDAF 101.

An event identifier can identify the type of event being subscribed to. Basically, event identifier is defined and supported by data producers 109 (e.g., 5G NFs/AFs/OAM). The data handler 101 may be receiving the list of event identifiers from data producers 109.

Example: 5G NFs (e.g., SMF and AMF) define the event identifiers (PDU Session release, UE mobility out of an Area of Interest, etc. defined by 3GPP 23.502) which NWDAF 101 will be used in association of the specific data exposure ID(s). In the current specs of TS23.288, there is a pre-defined way of exchanging these event identifiers between data producers (e.g., 5G NFs/AFs/OAM) and NWDAF.

As to receiving data request from a data consumer 107, the data handler receives the data request from data consumer which includes but not limited to the data exposure identifier and/or filter information and/or data reporting information and/or target of data reporting.

The Event Filter Information, as e.g. defined in 3GPP SA2 (TS23.502), provides Event Parameter Types and Event Parameter Value(s) to be matched against, in order to meet the condition for notifying the subscribed Event ID e.g. the Event Parameter Type could be "Area of interest" and Event Parameter Value list could be list of TAs; The Event Filter depends on the Event ID. The Event Filter Information is provided per Event ID(s) being subscribed to: within a subscription different Event ID(s) may be associated with different Event Filter Information.

The Event Reporting Information is exemplarily described in the following table below. Within a subscription, all Event ID(s) are associated with a unique Event Reporting Information.

### Event Reporting Information

| **Event Reporting Information Parameter** | **Description** | **Presence requirement** |
|---|---|---|
| 1) Event reporting mode | Mode of reporting - e.g reporting up to a maximum number of reports, periodic reporting along with periodicity, reporting up to a maximum duration | advantageous |
| 2) Maximum number of reports | Maximum number of reports after which the event subscription ceases to exist | (see NOTE 2) |
| 3) Maximum duration of reporting | Maximum duration after which the event subscription ceases to exist | (see NOTE 2) |
| 4) Immediate reporting flag | The Event provider NF notifies the current status of the subscribed event, if available, immediately to the consumer NF. | |
| NOTE 2: The requester may include 2) Maximum number of reports or 3) Maximum duration of reporting, or both, depending on 1) Event reporting mode. | | |

The target of event reporting may indicate a specific UE or PDU Session, a group of UE(s) or any UE (i.e. all UEs), Within a subscription all Event ID (s) are associated with the same target of event reporting (possibly corresponding to multiple UE or multiple PDU Sessions).

As to the association of data request to the data collection parameters, after receiving of the data request from data consumer, the data handler 101 (e.g. NWDAF) can associate the data request with the corresponding data to be collected (i.e., corresponding event identifier(s)). Here the association can be a mapping of the data exposure identifier with the corresponding event identifier(s) together with filter information and/or data reporting information and/or target of data reporting.

For example, the NWDAF 101 associates a request and/or subscription to analytics information (e.g., Analytics ID(s)) with data collection parameters (e.g., Event ID(s) + Event Filter information + Target of Event Reporting), where Mapping of the event identifier, optionally with filter information and/or data reporting information and/or target of data reporting, with the associated data exposure identifier(s) can be performed.

For example, the NWDAF 101 associates a request and/or subscription to data collection parameters (e.g., Event ID(s) + Event Filter information + Target of Event Reporting) with the corresponding request and/or subscription to analytics information (e.g., Analytics ID(s)).

As to determination of or process for data collection, the data handler 101 can determine the process for data collection based on the association information. If the available Event subscription(s) for Event ID(s) can be associated with new data request, no new event subscription is created. Otherwise, the network data handler creates new event subscription(s) to the respective data producer(s) or modify the existing subscription(s)

For example, the NWDAF 101 processes for trigger of a new event exposure subscription based on the association information.
- if the available event subscription(s) can be associated with new analytics request/subscription, no new event subscription is created.
- otherwise, the NWDAF 101 creates new event subscription(s) or modify the existing subscription(s).

As to the additional Information, the data handler 101 may or may not be a single instance or multiple instances. The data handler may 101 be able to create data exposure instance identifier or event instance identifier for a better control of association information. These identifiers can be considered as local identifiers.

The Analytics Instance ID<data exposure instance identifier> identifies an occurrence/instance of a request for an Analytics ID that NWDAF can generate with its specific set of Analytics Filter Information and Target of Analytics Reporting.

The Event Instance ID Identifies an occurrence/instance of a NWDAF request for an Event ID from NFs with its specific set of Event Filter Information and Target of Event Reporting. The NWDAF 101, i.e. the data handler 101, associates Event Instance IDs to Analytics Instance IDs, so that:
◆ One Event Instance ID can be associated with multiple Analytics Instance IDs;
◆ One Analytics Instance ID can be associated with multiple (unique) Event Instance IDs;
◆ If NWDAF receives a new request/subscription to Analytics ID, the NWDAF only creates a Analytics Instance ID, if no existing Analytics Instance ID can support the new request/subscription;
◆ If a new Analytics Instance ID is created by NWDAF, the NWDAF only creates new Event Instance IDs if the existing Event Instance IDs cannot be used.

As to data request patterns, e.g. two types of data request patterns are considered.
◆ Request, which is e.g. one time data request
◆ Subscribe, wherein this type of data request is an event subscription. The reporting method can be event based or periodic.

As to termination and/or un-subscription data request, when un-subscription to data request is received, the data handler 101 can be configured to one or more of
- delete the association information of the data request if the association is independent with the other data request and/or
- modify the association information related to the data request if the association is e.g. dependent with/from other data request(s).

As to the direct data transfer, the data handler 101 can be further configured to support a direct transfer of requested data from data producer(s) to the data consumer. For example: the data handler 101 forwards the collected data from data producer(s) 109 to the data consumer 107 directly without further processing.

As to the process data transfer, the data handler 101 can be further configured to
- fetch data from data Repository for further data processing,
- support data processing functionality (e.g., aggregation, composing) of fetched data from data repository,
- expose the processed data (e.g., aggregated data, composed data) to the data consumer.

For example: a specific data consumer 107 (e.g., OAM) requests multiple Analytics information (multiple Analytics IDs) to NWDAF 101 with the same (or similar) data reporting information). For example Analytics information #1 with data reporting rate of 5 minutes, Analytics information #2 with data reporting rate of 10 minutes. Data transfer to data consumer can be modified efficiently by processing data transfer. The NWDAF 101 may compose Analytics information #1 and #2 fetched by Repository and exposes a combined Analytics information every 10 minutes if the time can be synchronized to reduce data transfer.

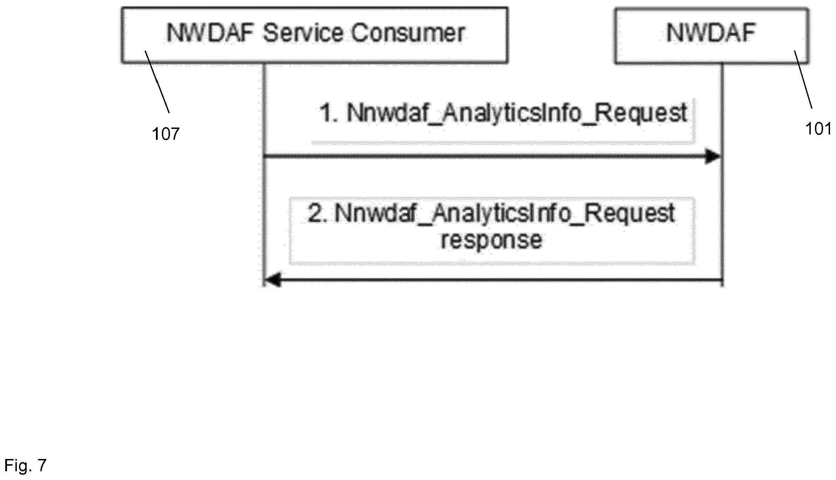

Figs. 6 and 7 show embodiments of the data handler 101 forming the NWDAF.

Fig. 6 refers to a procedure analytics subscribe/unsubscribe by NWDAF service consumer 107. This procedure can be used by any NWDAF service consumer 107 (e.g. including NFs/AFs/OAM) to subscribe/unsubscribe at the NWDAF 101 to be notified on analytics information, using e.g. Nnwdaf_AnalyticsSubscription service as described herein. Any network entity can consume this service as described herein.

As to the procedure, the NWDAF service consumer 107 subscribes to or cancels subscription to analytics information by e.g. invoking the Nnwdaf_AnalyticsSubscription_Subscribe/ Nnwdaf_AnalyticsSubscription_Unsubscribe service operation.

When a subscription to analytics information is received, the NWDAF 101 associates the subscription to analytics information with the required data to be collected and decides whether triggering new data collection is needed.

If NF service consumer 107 subscribes to analytics information, the NWDAF 101 notifies the NWDAF service consumer with the analytics information by invoking Nnwdaf_AnalyticsSubscription_Notify service operation.

Fig. 7 depicts the procedure associated with analytics request by NWDAF service consumer 107. This procedure is used by the NWDAF service consumer 107 (e.g. including NFs/AFs/OAM) to request and get from NWDAF analytics information, using e.g. the Nnwdaf_AnalyticsInfo service described herein.

As to the procedure, the NWDAF service consumer 107 requests analytics information by invoking Nnwdaf_AnalyticsInfo_Request service operation.

When a request to analytics information is received, the NWDAF associates the request to analytics information with the required data to be collected and decides whether triggering new data collection is needed. The NWDAF 107 responds with analytics information to the NWDAF service consumer 107.

Generally, the Data Collection feature permits the NWDAF 101 to retrieve data from various sources (e.g. NF such as AMF, SMF, PCF), as a basis of the computation of network analytics.

The available data may encompass:
- OAM global NF data,
- behaviour data related to individual UEs or UE groups (e.g. UE reachability), and pre-computed metrics covering UE populations (e.g. number of UEs present in a geographical area), per spatial and temporal dimensions (e.g. per region for a period of time),
- other NF data available in the 5GC (e.g. NRF).

The NWDAF 101 can use at least one of the following services:
- the Generic management services as defined in TS 28.532 [6] offered by OAM in order to collect OAM global NF data.
- the Exposure services offered by NFs/AFs in order to retrieve behaviour data and other non-OAM pre-computed metrics.
- Other NF services in order to collect NF data (e.g. NRF)

The NWDAF 101 can be able to discover the metrics supported by a NF/AF.

The data collection procedures can enable the NWDAF 101 to efficiently obtain the appropriate data, e.g. monitoring data, with the appropriate granularity.

When a request or subscription for statistics or predictions is received, the NWDAF 101 may not possess the necessary data to perform the service.

For example, the data on the monitoring period in the past matching the observation period may be required for the provision of statistics and predictions. The data on longer monitoring periods in the past is necessary for model training.

Therefore, in order to optimize the service quality, the NWDAF 101 may undertake the following actions:
- The NWDAF 101 may return a probability assertion by expressing the confidence in the analytics produced. With zero confidence, e.g. no analytics shall be returned. This confidence is likely to grow in the case of subscriptions.
- The value of the confidence depends on the level or urgency expressed by the time deadline as described herein, the level of accuracy, the availability of data. If no sufficient data is collected to provide an estimation for the requested level of accuracy before the time deadline, the service may return a zero confidence. Otherwise, the NWDAF may wait until enough data is collected before providing a response or a first notification.
- In order to be prepared for future requests on statistics from NFs/AFs/OAM, the NWDAF 101, upon operator configuration, may collect data on its own initiative, e.g. on samples of UEs (e.g. mobility), and retain the data collected in the data storage.

The volume and maximum duration of data storage is also subject of operator configuration.

The NWDAF 101 may decide to reduce the amount of data collection in case of high signaling load, by either prioritizing requests, reducing the duration of data collection, or the sampling ratios.

The NWDAF 101 may be able to decide when collecting data from NFs/AFs whether triggering new data collection is needed to prevent unnecessary signaling for data collection and unnecessary data transfer. The NWDAF 101 may take the following actions:
- The NWDAF 101 generates the association information by creating a mapping table of which request and/or subscription to analytics information (e.g., Analytics ID(s)) requires which data collection parameters (e.g., Event ID(s) + Event Filter information + + Event Reporting information + Target of Event Reporting).
- The NWDAF 101 processes for trigger of a new event exposure subscription based on the association information.
   - if the available event subscription(s) can be associated with new analytics request/subscription, no new event subscription is created.
   - otherwise, the NWDAF 101 creates new event subscription(s) or modify the existing subscription(s).

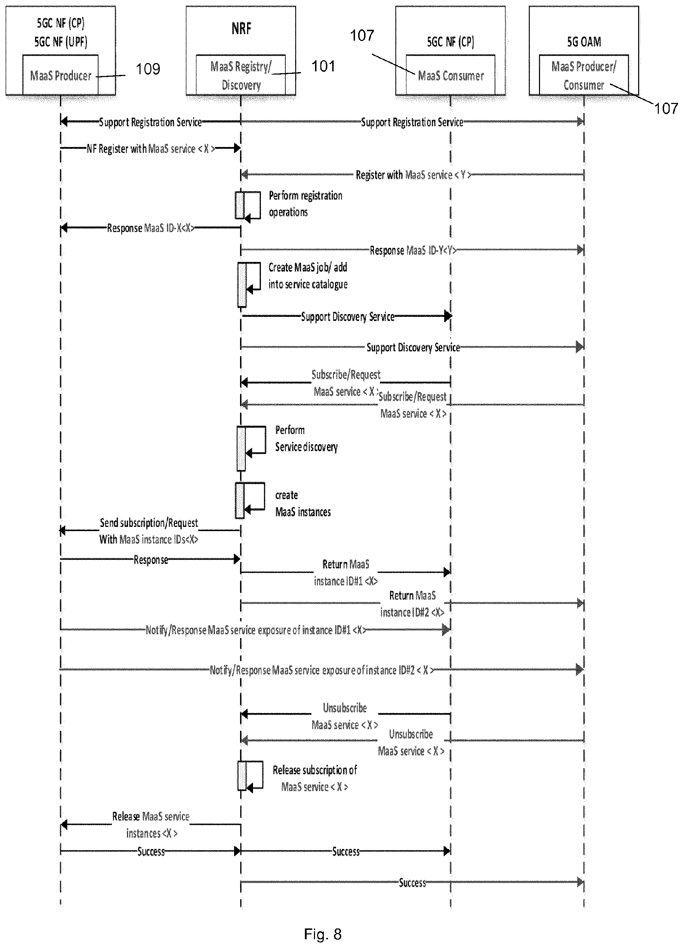

Fig. 8 shows a deployment of the data handler 101 as a Maas Task Manager in an embodiment in the context of the norm 3GPP SA2 TS23.501/502.

In order to support monitoring service in CP and UP, in addition to TS 23.501, MaaS functionalities are added (Producer & Consumer) into the impacted 5GC NF (UPF) and 5GC NFs (CP)- Furthermore, MaaS functionalities (Registry/Discovery) into 5GC NF (NRF) to support registration and discovery of MaaS services from CP and UP to OAM are added.

In addition to TS 23.502, MaaS services (Producer & Consumer) into the impacted 5GC NFs (CP) and 5GC NF (UPF) and MaaS services and interfaces (Registry/Discovery) into 5GC NF (NRF) to support OAM are added.

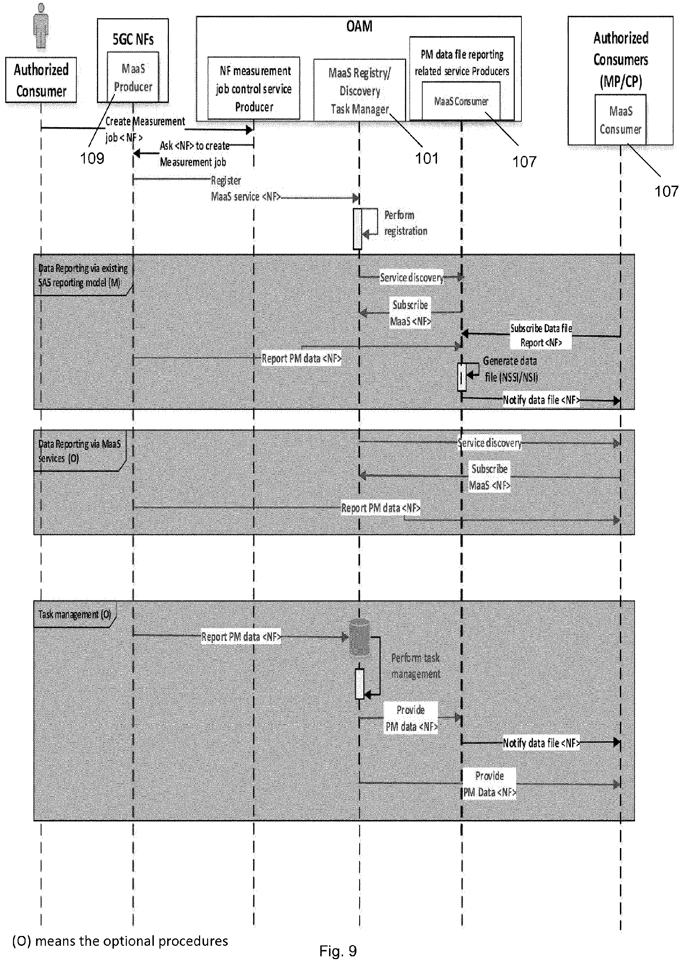

Fig. 9 shows a deployment of the data handler 101 as a Maas Task Manager in the context of 3GPP SA5, TS28.532/TS28.550 and TR28.805.

In reference to the TS 28.805, MaaS functionalities and services to coordinate with 5GC for SLA management are added. In reference to the TS 28.532/550, MaaS functionalities and services (Producer, Consumer, Registry/Discovery, Task Manager) to cover the limitations from the current PM data reporting services are added.

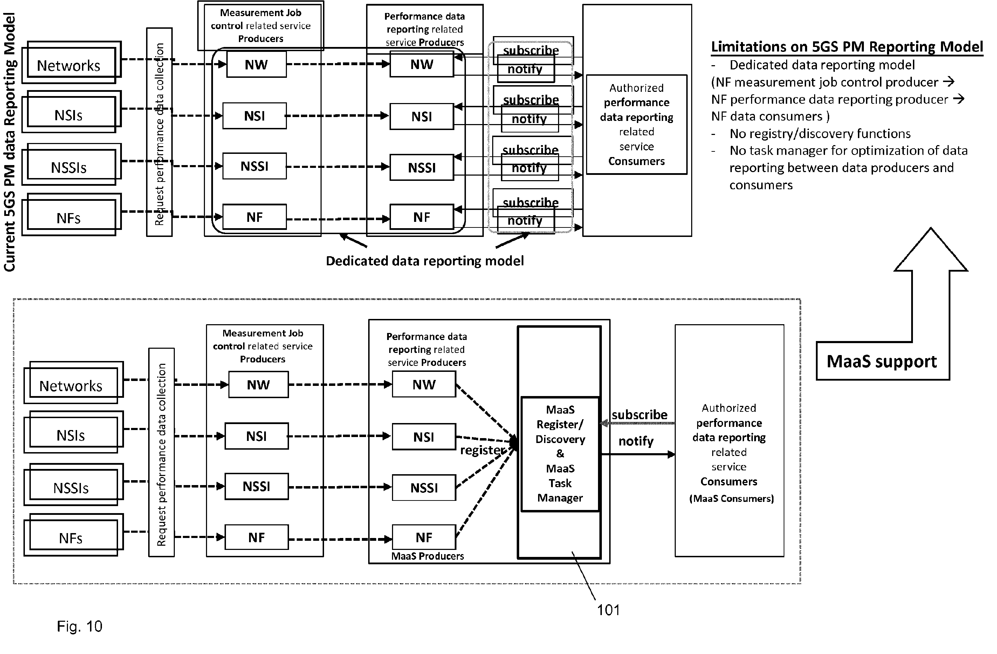

Fig. 10 shows a generic deployment of the data handler 101 in the context of 5G.

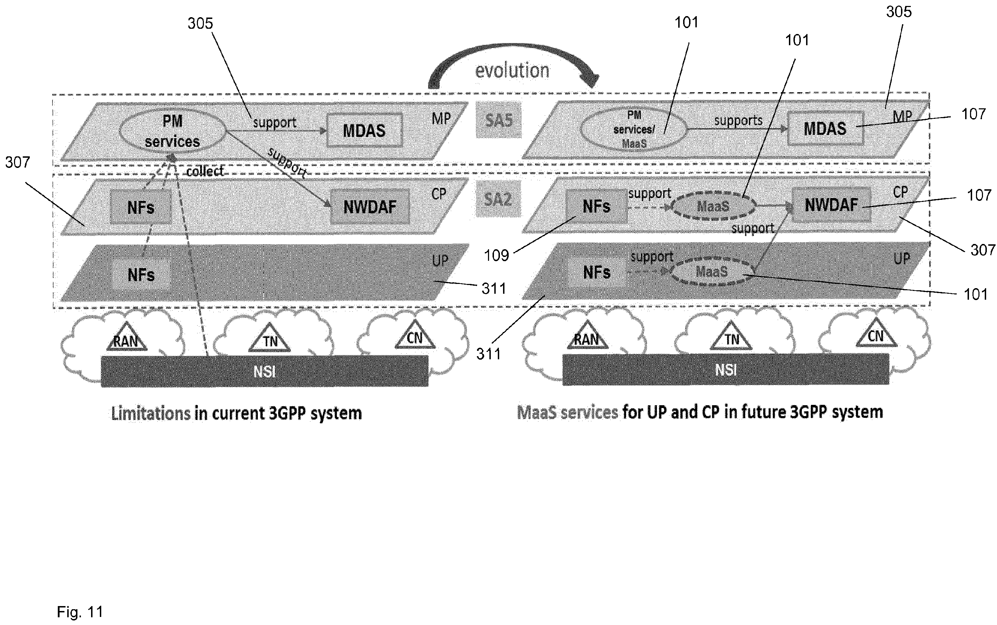

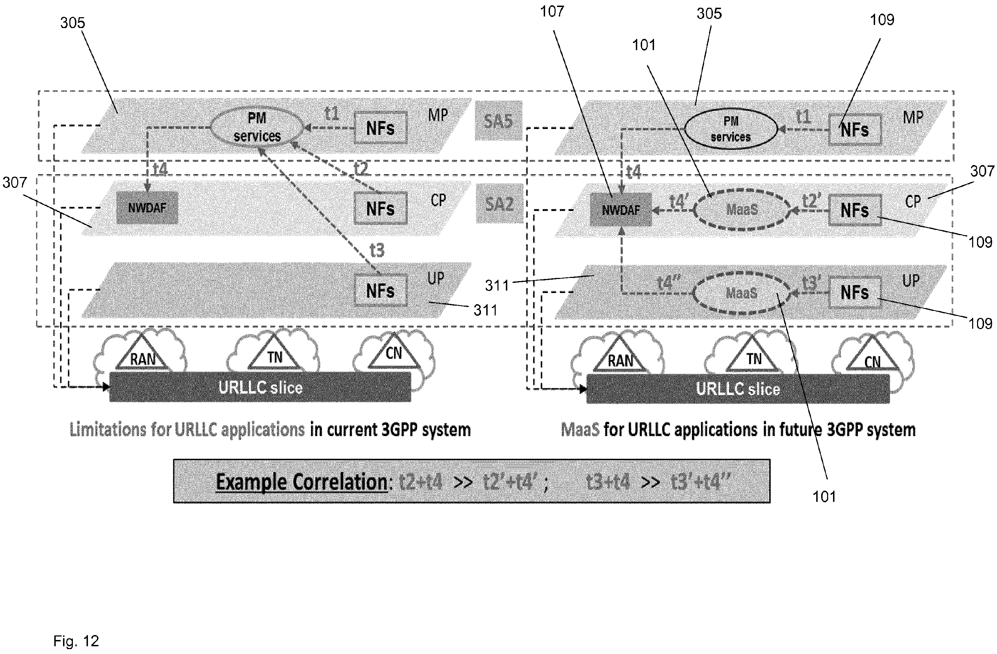

Figs. 11 and 12 demonstrate the additional functionality of the MaaS concept as described herein and as supported by the data handler 101 forming in an embodiment the MaaS task manager in comparison to the existing 3GPP system.

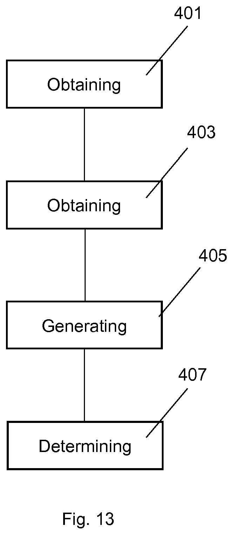

Fig. 13 shows a data handling method for handling monitoring data among network entities, comprising: obtaining 401 a first data request from e.g. the first network entity 107-1, the first data request comprising a first data identifier, the first data identifier relating to monitoring data, obtaining 403 one or more second data identifier from one or more other network entities 109, e.g. data producers, wherein the one or more second data identifier is related to the monitoring data to be collected from one or more other network entities, generating 405 association information based on the first data identifier and the one or more second data identifier, and determining 407, based on the association information, whether the monitoring data to be collected is already available, e.g. at the data handler 101, or determine whether the monitoring data to be collected should be collected from the one or more other network entities, e.g. by the data handler 101.

The method can be implemented by the data handler 101. The method can further implement the MaaS service as described herein.

## Claims

1. Data handler (101) being configured to handle monitoring data among network entities, wherein the data handler is configured to:
obtain a first data request from a first network entity, the first data request comprising a first data identifier, the first data identifier relating to monitoring data;
obtain one or more second data identifier from one or more other network entities, wherein the one or more second data identifier is related to the monitoring data to be collected from the one or more other network entities;
generate association information based on the first data identifier and the one or more second data identifier;
determine, based on the association information, whether the monitoring data to be collected is already available at the data handler (101), or determine whether the monitoring data to be collected should be collected from the one or more other network entities by the data handler (101); and
wherein,
- if the monitoring data to be collected is not available, upon the basis of a subscription, then the data handler (101) is configured to retrieve the monitoring data to be collected from the one or more other network entities upon the basis of at least one further data request, and wherein the data handler is configured to send and/or forward the retrieved monitoring data to be collected to the first network entity upon receiving the retrieved monitoring data; or wherein
- if the monitoring data is available at the data handler, then the data handler (101) is configured to send and/or forward the available monitoring data to the first network entity.

2. The data handler (101) of one of the preceding claims, which is configured to determine that the monitoring data is already available at the data handler (101) if the monitoring data is receivable by the data handler (101) upon a basis of a data subscription from the one or more other network entities.

3. The data handler (101) of anyone of the preceding claims, which is configured to generate the at least one further data request if the monitoring data is not available at the data handler (101), the at least one further data request comprising at least one further data identifier relating to at least a subset of the monitoring data to be collected, and/or a subscription requesting a subscription of at least the subset of the monitoring data from at least one further network entity.

4. The data handler (101) of claim 3, which is configured to obtain a second data identifier as the at least one further data identifier, the second data identifier relating to monitoring data to be collected from a second network entity, wherein the data handler (101) is configured to obtain the second data identifier, before receiving the first data request.

5. The data handler (101) of anyone of the preceding claims, which is configured to generate the first data identifier, and to transmit the first data identifier towards the first network entity, before receiving the first data request.

6. The data (101) handler of anyone of the preceding claims, which is configured to associate the first data identifier with at least one data collection parameter in order to associate the first data identifier with the monitoring data to be collected, wherein the at least one data collection parameter is the second data identifier and indicates which data compose the monitoring data or a specific subset of monitoring data.

7. The data handler (101) according to anyone of the preceding claims, wherein the first data identifier is formed by and/or comprises at least one of the following identifiers: data exposure identifier, a data analytics identifier relating to analytics information, and wherein the second data identifier is formed by and/or comprises at least one of the following identifiers: event identifier, identifier relating to monitoring data to be collected from the second network entity, such as UE reachability.

8. The data handler (101) according to anyone of the preceding claims, wherein the first data request further comprises a filter information, filtering a geographical area and/or a threshold value associated with the first identifier , and/or data reporting information and/or target of data reporting indication and, wherein the further data request further comprises a filter information, filtering a geographical area and/or threshold value associated with the second identifier, and/or data reporting information and/or target of data reporting indication.

9. The data handler (101) according to anyone of the preceding claims, which is a network data analytics function (NWDAF) entity, wherein the first network entity is a NWDAF service consumer, wherein the data handler (101) is configured to receive the first data request, the first data request indicating a subscription and/or request of analytics information, wherein the first data identifier is an analytics identifier, wherein the processor is configured to associate the analytics identifier and/or the first data request with the data to be collected as the monitoring data, wherein the monitoring data to be collected is associated with monitoring parameters, such as at least one event identifier and/or event filter information and/or event reporting information and/or target of data reporting indication, and wherein the data handler (101) is configured to decide whether to trigger the data collection from the one of more other network entities if a new subscription of analytics information is necessary, or whether the requested analytics information is already provided to the data handler (101) upon the basis of an already existing subscription of analytics information from at the one or more other network entities.

10. The data handler (101) according to anyone of the preceding claims, which is a network data analytics function (NWDAF) entity, wherein the first network entity is a NWDAF service consumer, wherein the data handler (101) is configured to receive a subscription termination request from the first network entity, the subscription termination request indicating a termination of a subscription of analytics information, wherein the data handler (101) is configured to terminate a transmission of monitoring data relating to the terminated subscription to the first network entity, wherein the data handler data handler (101) is configured to modify the association of the subscription request from the first network entity and monitoring data to be collected or wherein data handler (101) is configured to delete the association of the subscription request from the first network entity and monitoring data to be collected.

11. The data handler (101) according to anyone of the preceding claims, wherein the data handler (101) is configured to determine a data collection process in order to collect data from the one or more other network entities in order to obtain the monitoring data.

12. The data handler (101) according to anyone of the preceding claims, wherein the data handler is configured to determine the one or more other network entities from which data should be collected to obtain the monitoring data upon the basis of the received first data request and/or the first data identifier.

13. The data handler (101) according to anyone of the preceding claims, wherein the data handler (101) is configured to receive the one or more second data identifier from the one or more other network entities, wherein the one or more second data identifier identifies the monitoring data to be collected from one or more other network entities.

14. Data handling method for handling monitoring data among network entities, comprising:
obtaining (401) a first data request from a first network entity, the first data request comprising a first data identifier, the first data identifier relating to monitoring data;
obtaining (403) one or more second data identifier from one or more other network entities, wherein the one or more second data identifier is related to the monitoring data to be collected from the one or more other network entities;
generating (405) association information based on the first data identifier and the one or more second data identifier;
determining (407), based on the association information, whether the monitoring data to be collected is already available at the data handler, or determine whether the monitoring data to be collected should be collected from the one or more other network entities; and
- if the monitoring data to be collected is not available, upon the basis of a subscription, retrieving the monitoring data to be collected from the one or more other network entities upon the basis of at least one further data request, and sending and/or forwarding the retrieved monitoring data to be collected to the first network entity upon receiving the retrieved monitoring data; or wherein
- if the monitoring data is available, sending and/or forwarding the available monitoring data to the first network entity.

## Patentansprüche

1. Daten-Handler (101), der dazu konfiguriert ist, Überwachungsdaten unter Netzentitäten zu handhaben, wobei der Daten-Handler zu Folgendem konfiguriert ist:
Erlangen einer ersten Datenanforderung aus einer ersten Netzentität, wobei die erste Datenanforderung eine erste Datenkennung umfasst, wobei sich die erste Datenkennung auf Überwachungsdaten bezieht;
Erlangen einer oder mehrerer zweiter Datenkennungen aus einer oder mehreren anderen Netzentitäten, wobei die eine oder die mehreren zweiten Datenkennungen auf die Überwachungsdaten bezogen sind, die aus der einen oder den mehreren anderen Netzentitäten zu erheben sind;
Erzeugen von Zuordnungsinformationen basierend auf der ersten Datenkennung und der einen oder den mehreren zweiten Datenkennungen;
Bestimmen, basierend auf den Zuordnungsinformationen, ob die zu erhebenden Überwachungsdaten bereits bei dem Daten-Handler (101) verfügbar sind, oder Bestimmen, ob die zu erhebenden Überwachungsdaten durch den Daten-Handler (101) aus der einen oder den mehreren anderen Netzentitäten erhoben werden sollten; und
wobei,
- wenn die zu erhebenden Überwachungsdaten auf Grundlage einer Anmeldung nicht verfügbar sind, der Daten-Handler (101) dazu konfiguriert ist, die zu erhebenden Überwachungsdaten aus der einen oder den mehreren anderen Netzentitäten auf Grundlage mindestens einer weiteren Datenanforderung abzurufen, und wobei der Daten-Handler dazu konfiguriert ist, die abgerufenen zu erhebenden Überwachungsdaten nach Empfang der abgerufenen Überwachungsdaten an die erste Netzentität zu senden und/oder weiterzuleiten; oder wobei,
- wenn die Überwachungsdaten bei dem Daten-Handler verfügbar sind, der Daten-Handler (101) dazu konfiguriert ist, die verfügbaren Überwachungsdaten an die erste Netzentität zu senden und/oder weiterzuleiten.

2. Daten-Handler (101) nach einem der vorhergehenden Ansprüche, der dazu konfiguriert ist, zu bestimmen, dass die Überwachungsdaten bereits bei dem Daten-Handler (101) verfügbar sind, wenn die Überwachungsdaten durch den Daten-Handler (101) auf Grundlage einer Datenanmeldung aus der einen oder den mehreren anderen Netzentitäten empfangbar sind.

3. Daten-Handler (101) nach einem der vorhergehenden Ansprüche, der dazu konfiguriert ist, die mindestens eine weitere Datenanforderung zu erzeugen, wenn die Überwachungsdaten bei dem Daten-Handler (101) nicht verfügbar sind, wobei die mindestens eine weitere Datenanforderung mindestens eine weitere Datenkennung, die sich auf mindestens einen Teilsatz der zu erhebenden Überwachungsdaten bezieht, und/oder eine Anmeldung, die eine Anmeldung für mindestens den Teilsatz der Überwachungsdaten aus mindestens einer weiteren Netzentität anfordert, umfasst.

4. Daten-Handler (101) nach Anspruch 3, der dazu konfiguriert ist, eine zweite Datenkennung als die mindestens eine weitere Datenkennung zu erlangen, wobei sich die zweite Datenkennung auf zu erhebende Überwachungsdaten aus einer zweiten Netzentität bezieht, wobei der Daten-Handler (101) dazu konfiguriert ist, die zweite Datenkennung vor Empfang der ersten Datenkennung zu erlangen.

5. Daten-Handler (101) nach einem der vorhergehenden Ansprüche, der dazu konfiguriert ist, die erste Datenkennung zu erzeugen und die erste Datenkennung vor Empfang der ersten Datenanforderung in Richtung der ersten Netzentität zu übertragen.

6. Daten-Handler (101) nach einem der vorhergehenden Ansprüche, der dazu konfiguriert ist, die erste Datenkennung mindestens einem ersten Datenerhebungsparameter zuzuordnen, um die erste Datenkennung den zu erhebenden Überwachungsdaten zuzuordnen, wobei der mindestens eine Datenerhebungsparameter die zweite Datenkennung ist und angibt, welche Daten die Überwachungsdaten oder einen besonderen Teilsatz von Überwachungsdaten ausmachen.

7. Daten-Handler (101) nach einem der vorhergehenden Ansprüche, wobei die erste Datenkennung durch mindestens eine der folgenden Kennungen gebildet wird und/oder diese umfasst: eine Datenfreigabekennung, eine Datenanalysekennung, die sich auf Analyseinformationen bezieht, und wobei die zweite Datenkennung durch mindestens eine der folgenden Kennungen gebildet wird und/oder diese umfasst: eine Ereigniskennung, eine Kennung, die sich auf Überwachungsdaten bezieht, die aus der zweiten Netzentität zu erheben sind, wie etwa eine UE-Erreichbarkeit.

8. Daten-Handler (101) nach einem der vorhergehenden Ansprüche, wobei die erste Datenanforderung ferner Filterinformationen, die einen geographischen Bereich und/oder einen Schwellenwert filtern, welcher der ersten Kennung zugeordnet ist, und/oder Datenberichterstattungsinformationen und/oder eine Datenzielberichterstattungsangabe umfasst und wobei die weitere Datenanforderung ferner Filterinformationen, die einen geographischen Bereich und/oder einen Schwellenwert filtern, welcher der zweiten Kennung zugeordnet ist, und/oder Datenberichterstattungsinformationen und/oder eine Datenzielberichterstattungsangabe umfasst.

9. Daten-Handler (101) nach einem der vorhergehenden Ansprüche, der eine Netzdatenanalysefunktionsentität (NWDAF-Entität) ist, wobei die erste Netzentität ein NWDAF-Dienstverbraucher ist, wobei der Daten-Handler (101) dazu konfiguriert ist, die erste Datenanforderung zu empfangen, wobei die erste Datenanforderung eine Anmeldung für und/oder eine Anforderung von Analyseinformationen angibt, wobei die erste Datenkennung eine Analysekennung ist, wobei der Prozessor dazu konfiguriert ist, die Analysekennung und/oder die erste Datenanforderung den als die Überwachungsdaten zu erhebenden Daten zuzuordnen, wobei die zu erhebenden Überwachungsdaten Überwachungsparametern, wie etwa mindestens einer Ereigniskennung und/oder Ereignisfilterinformationen und/oder Ereignisberichterstattungsinformationen und/oder Datenzielberichterstattungsinformationen, zugeordnet sind und wobei der Daten-Handler (101) dazu konfiguriert ist, zu entscheiden, ob die Datenerhebung aus der einen oder den mehreren anderen Netzentitäten auszulösen ist, wenn eine neue Anmeldung für Analyseinformationen erforderlich ist, oder ob die angeforderten Analyseinformationen dem Daten-Handler (101) auf Grundlage einer bereits existierenden Anmeldung für Analyseinformationen aus der einen oder den mehreren anderen Netzentitäten bereits bereitgestellt sind.

10. Daten-Handler (101) nach einem der vorhergehenden Ansprüche, der eine Netzdatenanalysefunktionsentität (NWDAF-Entität) ist, wobei die erste Netzentität ein NWDAF-Dienstverbraucher ist, wobei der Daten-Handler (101) dazu konfiguriert ist, eine Anmeldungsbeendigungsanforderung aus der ersten Netzentität zu empfangen, wobei die Anmeldungsbeendigungsanforderung eine Beendigung einer Anmeldung für Analyseinformationen angibt, wobei der Daten-Handler (101) dazu konfiguriert ist, eine Übertragung von Überwachungsdaten, die sich auf die beendigte Anmeldung beziehen, an die erste Netzentität zu beendigen, wobei der Daten-Handler (101) dazu konfiguriert ist, die Zuordnung der Anmeldungsanforderung aus der ersten Netzentität und der zu erhebenden Überwachungsdaten zu modifizieren, oder wobei der Daten-Handler (101) dazu konfiguriert ist, die Zuordnung der Anmeldungsanforderung aus der ersten Netzentität und der zu erhebenden Daten zu löschen.

11. Daten-Handler (101) nach einem der vorhergehenden Ansprüche, wobei der Daten-Handler (101) dazu konfiguriert ist, einen Datenerhebungsprozess zu bestimmen, um Daten aus der einen oder den mehreren anderen Netzentitäten zu erheben, um die Überwachungsdaten zu erlangen.

12. Daten-Handler (101) nach einem der vorhergehenden Ansprüche, wobei der Daten-Handler dazu konfiguriert ist, die eine oder die mehreren anderen Netzentitäten, aus denen Daten erhoben werden sollten, zu bestimmen, um die Überwachungsdaten auf Grundlage der empfangenen ersten Datenanforderung und/oder der ersten Datenkennung zu erlangen.

13. Daten-Handler (101) nach einem der vorhergehenden Ansprüche, wobei der Daten-Handler (101) dazu konfiguriert ist, die eine oder die mehreren zweiten Datenkennungen aus der einen oder den mehreren anderen Netzentitäten zu empfangen, wobei die eine oder die mehreren zweiten Datenkennungen die Überwachungsdaten identifizieren, die aus einer oder mehreren anderen Netzentitäten zu erheben sind.

14. Datenhandhabungsverfahren zum Handhaben von Überwachungsdaten unter Netzentitäten, umfassend:
Erlangen (401) einer ersten Datenanforderung aus einer ersten Netzentität, wobei die erste Datenanforderung eine erste Datenkennung umfasst, wobei sich die erste Datenkennung auf Überwachungsdaten bezieht;
Erlangen (403) einer oder mehrerer zweiter Datenkennungen aus einer oder mehreren anderen Netzentitäten, wobei die eine oder die mehreren zweiten Datenkennungen auf die Überwachungsdaten bezogen sind, die aus der einen oder den mehreren anderen Netzentitäten zu erheben sind;
Erzeugen (405) von Zuordnungsinformationen basierend auf der ersten Datenkennung und der einen oder den mehreren zweiten Datenkennungen;
Bestimmen (407), basierend auf den Zuordnungsinformationen, ob die zu erhebenden Überwachungsdaten bereits bei dem Daten-Handler verfügbar sind, oder Bestimmen, ob die zu erhebenden Überwachungsdaten aus der einen oder den mehreren anderen Netzentitäten erhoben werden sollten; und,
- wenn die zu erhebenden Überwachungsdaten auf Grundlage einer Anmeldung nicht verfügbar sind, Abrufen der zu erhebenden Überwachungsdaten aus der einen oder den mehreren anderen Netzentitäten auf Grundlage mindestens einer weiteren Datenanforderung und Senden und/oder Weiterleiten der abgerufenen zu erhebenden Überwachungsdaten an die erste Netzentität nach Empfang der abgerufenen Überwachungsdaten; oder wobei,
- wenn die Überwachungsdaten verfügbar sind, Senden und/oder Weiterleiten der verfügbaren Überwachungsdaten an die erste Netzentität.

## Revendications

1. Gestionnaire de données (101) configuré pour gérer des données de surveillance parmi des entités de réseau, dans lequel le gestionnaire de données est configuré pour :
obtenir une première demande de données provenant d'une première entité de réseau, la première demande de données comprenant un premier identifiant de données, le premier identifiant de données étant relatif à des données de surveillance ;
obtenir un ou plusieurs seconds identifiants de données auprès d'une ou de plusieurs autres entités de réseau, dans lequel le ou les seconds identifiants de données étant liés aux données de surveillance à collecter auprès d'une ou de plusieurs autres entités de réseau ;
générer des informations d'association sur la base du premier identifiant de données et du ou des seconds identifiants de données ;
déterminer, sur la base des informations d'association, si les données de surveillance à collecter sont déjà disponibles au niveau du gestionnaire de données (101), ou déterminer si les données de surveillance à collecter doivent être collectées à partir d'une ou de plusieurs autres entités de réseau par le gestionnaire de données (101) ; et
dans lequel,
- si les données de surveillance à collecter ne sont pas disponibles, sur la base d'un abonnement, alors le gestionnaire de données (101) est configuré pour récupérer les données de surveillance à collecter à partir d'une ou de plusieurs autres entités de réseau sur la base d'au moins une demande de données supplémentaire, et dans lequel le gestionnaire de données est configuré pour envoyer et/ou transmettre les données de surveillance récupérées à collecter à la première entité de réseau lors de la réception des données de surveillance récupérées ; ou dans lequel
- si les données de surveillance sont disponibles au niveau du gestionnaire de données, alors le gestionnaire de données (101) est configuré pour envoyer et/ou transmettre les données de surveillance disponibles à la première entité réseau.

2. Gestionnaire de données (101) selon l'une des revendications précédentes, qui est configuré pour déterminer que les données de surveillance sont déjà disponibles au niveau du gestionnaire de données (101) si les données de surveillance peuvent être reçues par le gestionnaire de données (101) sur la base d'un abonnement de données provenant d'une ou de plusieurs autres entités de réseau.

3. Gestionnaire de données (101) selon l'une quelconque des revendications précédentes, qui est configuré pour générer l'au moins une des demandes de données supplémentaire si les données de surveillance ne sont pas disponibles au niveau du gestionnaire de données (101), l'au moins une demande de données supplémentaire comprenant au moins un identifiant de données supplémentaire relatif à au moins un sous-ensemble des données de surveillance à collecter, et/ou un abonnement demandant un abonnement d'au moins le sous-ensemble des données de surveillance à partir d'au moins une autre entité de réseau.

4. Gestionnaire de données (101) selon la revendication 3, qui est configuré pour obtenir un second identifiant de données en tant qu'au moins un autre identifiant de données, le second identifiant de données étant relatif aux données de surveillance à collecter à partir d'une seconde entité de réseau, dans lequel le gestionnaire de données (101) est configuré pour obtenir le second identifiant de données, avant de recevoir la première demande de données.

5. Le gestionnaire de données (101) selon l'une quelconque des revendications précédentes, qui est configuré pour générer le premier identifiant de données et pour transmettre le premier identifiant de données vers la première entité de réseau, avant de recevoir la première demande de données.

6. Gestionnaire de données (101) selon l'une quelconque des revendications précédentes, qui est configuré pour associer le premier identifiant de données à au moins un paramètre de collecte de données afin d'associer le premier identifiant de données aux données de surveillance à collecter, dans lequel l'au moins un paramètre de collecte de données est le second identifiant de données et indique quelles données composent les données de surveillance ou un sous-ensemble spécifique de données de surveillance.

7. Gestionnaire de données (101) selon l'une quelconque des revendications précédentes, dans lequel le premier identifiant de données est formé par et/ou comprend au moins l'un des identifiants suivants : un identifiant d'exposition de données, un identifiant d'analyse de données relatif aux informations d'analyse, et dans lequel le second identifiant de données est formé par et/ou comprend au moins l'un des identifiants suivants : un identifiant d'événement, un identifiant relatif aux données de surveillance à collecter à partir de la seconde entité de réseau, telles que l'accessibilité de l'UE.

8. Gestionnaire de données (101) selon l'une quelconque des revendications précédentes, dans lequel la première demande de données comprend également des informations de filtre, filtrant une zone géographique et/ou une valeur de seuil associée au premier identifiant, et/ou des informations de rapport de données et/ou une cible d'indication de rapport de données et, dans lequel la demande de données supplémentaire comprend également des informations de filtre, filtrant une zone géographique et/ou une valeur de seuil associée au second identifiant, et/ou des informations de rapport de données et/ou une cible d'indication de rapport de données.

9. Gestionnaire de données (101) selon l'une quelconque des revendications précédentes, qui est une entité de fonction d'analyse de données de réseau (NWDAF), dans lequel la première entité de réseau est un consommateur de service NWDAF, dans lequel le gestionnaire de données (101) est configuré pour recevoir la première demande de données, la première demande de données indiquant un abonnement et/ou une demande d'informations d'analyse, dans lequel le premier identifiant de données est un identifiant d'analyse, dans lequel le processeur est configuré pour associer l'identifiant d'analyse et/ou la première demande de données aux données à collecter en tant que données de surveillance, dans lequel les données de surveillance à collecter sont associées à des paramètres de surveillance, tels qu'au moins un identifiant d'événement et/ou des informations de filtre d'événement et/ou des informations de rapport d'événement et/ou une cible d'indication de rapport de données, et dans lequel le gestionnaire de données (101) est configuré pour décider s'il faut déclencher la collecte de données à partir d'une ou de plusieurs autres entités de réseau si un nouvel abonnement d'informations d'analyse est nécessaire, ou si les informations d'analyse demandées sont déjà fournies au gestionnaire de données (101) sur la base d'un abonnement déjà existant d'informations d'analyse à partir d'une ou de plusieurs autres entités de réseau.

10. Gestionnaire de données (101) selon l'une quelconque des revendications précédentes, qui est une entité de fonction d'analyse de données de réseau (NWDAF), dans lequel la première entité de réseau est un consommateur de service NWDAF, dans lequel le gestionnaire de données (101) est configuré pour recevoir une demande de résiliation d'abonnement de la première entité de réseau, la demande de résiliation d'abonnement indiquant une résiliation d'un abonnement d'informations d'analyse, dans lequel le gestionnaire de données (101) est configuré pour mettre fin à une transmission de données de surveillance relatives à l'abonnement résilié à la première entité de réseau, dans lequel le gestionnaire de données (101) est configuré pour modifier l'association de la demande d'abonnement de la première entité de réseau et des données de surveillance à collecter ou dans lequel le gestionnaire de données (101) est configuré pour supprimer l'association de la demande d'abonnement de la première entité de réseau et des données de surveillance à collecter.

11. Gestionnaire de données (101) selon l'une quelconque des revendications précédentes, dans lequel le gestionnaire de données (101) est configuré pour déterminer un processus de collecte de données afin de collecter des données à partir d'une ou de plusieurs autres entités de réseau afin d'obtenir les données de surveillance.

12. Gestionnaire de données (101) selon l'une quelconque des revendications précédentes, dans lequel le gestionnaire de données est configuré pour déterminer une ou plusieurs autres entités de réseau à partir desquelles des données doivent être collectées pour obtenir les données de surveillance sur la base de la première demande de données reçue et/ou du premier identifiant de données.

13. Gestionnaire de données (101) selon l'une quelconque des revendications précédentes, dans lequel le gestionnaire de données (101) est configuré pour recevoir le ou les seconds identifiants de données provenant de la ou des autres entités de réseau, dans lequel le ou les seconds identifiants de données identifient les données de surveillance à collecter auprès d'une ou de plusieurs autres entités de réseau.

14. Procédé de traitement de données pour gérer des données de surveillance parmi des entités de réseau, comprenant :
l'obtention (401) d'une première demande de données provenant d'une première entité de réseau, la première demande de données comprenant un premier identifiant de données, le premier identifiant de données étant relatif à des données de surveillance ;
l'obtention (403) d'un ou de plusieurs seconds identifiants de données auprès d'une ou de plusieurs autres entités de réseau, dans lequel le ou les seconds identifiants de données étant liés aux données de surveillance à collecter auprès d'une ou de plusieurs autres entités de réseau ;
la génération (405) des informations d'association sur la base du premier identifiant de données et du ou des seconds identifiants de données ;
la détermination (407), sur la base des informations d'association, si les données de surveillance à collecter sont déjà disponibles au niveau du gestionnaire de données, ou déterminer si les données de surveillance à collecter doivent être collectées à partir d'une ou de plusieurs autres entités de réseau ; et
- si les données de surveillance à collecter ne sont pas disponibles, sur la base d'un abonnement, la récupération des données de surveillance à collecter auprès d'une ou de plusieurs entités de réseau supplémentaire sur la base d'au moins une autre demande de données, et l'envoi et/ou la transmission des données de surveillance récupérées à collecter à la première entité de réseau lors de la réception des données de surveillance récupérées ; ou dans lequel
- si les données de surveillance sont disponibles, l'envoi et/ou la transmission des données de surveillance disponibles à la première entité réseau.
